# EUROPEAN PATENT SPECIFICATION

(11) **EP 1 255 248 B1**
(45) Date of publication and mention of the grant of the patent: **29.12.2004**
(21) Application number: 02008334.1
(22) Date of filing: 11.04.2002
(51) Int. Cl.: G11B 17/04

(54) **Disk centring mechanism in a disk playback device**
Plattenzentriermechanismus eines Plattenwiedergabegeräts
Mécanisme de centrage de disques dans un appareil de reproduction de disques

(30) Priority: 13.04.2001 JP 2001115567
(43) Date of publication of application: 06.11.2002
(73) Proprietor: Pioneer Corporation, Tokyo 153-0063 (JP)
(72) Inventor: Mizoguchi, Takashi, c/o Pioneer Corporation, Kawagoe-shi, Saitama 350-0822 (JP); Togashi, Jun, c/o Pioneer Corporation, Kawagoe-shi, Saitama 350-0822 (JP); Sawada, Nobutaka, c/o Pioneer Corporation, Kawagoe-shi, Saitama 350-0822 (JP); Kinoshita, Hideki, c/o Pioneer Corporation, Kawagoe-shi, Saitama 350-0822 (JP); Yasaki, Akira, c/o Pioneer Corporation, Kawagoe-shi, Saitama 350-0822 (JP)
(74) Representative: Grünecker, Kinkeldey, Stockmair & Schwanhäusser Anwaltssozietät

(56) References cited:
- EP-A- 1 035 542
- US-A- 5 010 484

## Description

### BACKGROUND OF THE INVENTION

### Field of the Invention

This invention relates to a positional displacement compensating mechanism according to the preamble portion of claim 1.

### Description of the Related Art

A CD player, as a recording medium playback device, is mounted in a dashboard of a car as a vehicle. The CD player reads out information recorded on a recording medium such as a compact disc (CD for short). Such record medium playback device is shown, for instance, in US 5,010,484,

The CD player includes a main body mounted in the dashboard, a recording medium insertion opening opened in the main body, a carrying unit, a clamping playback unit, a positioning member and a sensing member. The main body is formed into box-shape with a plurality of sheet metal parts combined together. The CD is inserted through the recording medium insertion opening.

The carrying unit is for carrying the CD inserted through the recording medium insertion opening to a predetermined playback position and for carrying the CD from the playback position to the recording medium insertion opening and ejecting the CD from the main body. The carrying unit has a pair of clamping members movable to close or apart mutually.

One of a pair of clamping members has a carrying roller rotated by a driver such as a motor. The carrying roller is rotated by the driver such as the motor to carry the CD. The other clamping member has a low-friction-coefficient slide piece. The CD is clamped between the slide piece and the carrying roller to orient a direction of carrying the CD. The carrying unit clamps the CD between a pair of the clamping members to carry the CD.

The clamping playback unit includes a pair of second clamping members movable to close or apart mutually. One of the pair of second centering members has a disc-shaped clamper. The clamper is mounted rotatably for the one second clamping member.

The other second clamping member includes a turning table rotated by a driver such as a motor and an optical pickup for reading information recorded on the CD. The turning table is located in a position corresponding to the clamper. The turning table rotates the CD to be inserted into a center hole of the CD and be turned.

The pair of second clamping members clamps the CD between the turning table and the clamper to move close mutually. After clamping the CD between the pair of second clamping members, the clamping playback unit clamps the CD. Then, the optical pickup of the clamping playback unit reads out information recorded on the CD.

The positioning member is provided between the pair of second clamping members and mounted movably on the one second clamping member to close or apart mutually. The positioning member positions the CD to abut on the CD, when moving apart from the one second clamping member. The positioning member moves apart from the CD, when closing to the one second clamping member. The positioning member is energized to move apart from the one second clamping member. The positioning member is pushed toward the one second clamping member by an arm member, when the CD is clamped by the clamping playback unit.

The sensing unit is formed into band shape. The sensing unit is mounted longer direction thereof along a direction of width of the main body at the center portion thereof rotatably on the positioning member. The sensing member can rotate between a position in which an end thereof abuts on a CD and a position in which the end thereof move apart from the CD. The sensing member is energized to a direction in which the end thereof abuts on the CD.

The sensing member is rotated when a CD abuts on the end and the CD pushes the end. When the sensing member rotates, the sensing member starts to move the pair of clamping members apart mutually and to move the pair of second clamping member close mutually.

When the CD is inserted from the recording medium insertion opening into the main body, the CD is clamped between the pair of clamping members of the carrying unit. Then, the CD is carried toward a space between the pair of second clamping members of the clamping playback unit by rotation of the carrying roller.

When the CD abuts on the end of the sensing member, the CD is simultaneously positioned by the positioning member. Then, while the sensing member is rotated and the pair of clamping member of the carrying unit moves apart from the CD, the CD is clamped between the second clamping members of the clamping playback unit. The positioning member is pushed toward the one second clamping member by the arm member. After the positioning member is moved apart from the CD, the CD is rotated by the turning table for reading information.

### Objects to be solved

When the CD is not clamped by the clamping playback unit, the positioning member is apart from the one second clamping member to clamp the CD securely by the clamping playback unit. When the CD is clamped by the clamping playback unit, the positioning member is moved apart from the CD to close to the one second clamping member without obstructing rotation of the CD.

If the second clamping members and the positioning member have respectively a dimension error or an error in assembling, a relative position between the one second clamping member and the positioning member may be discrepant in the above clamping condition. Physically, the positioning member over-pushes the one second clamping member to move apart from the other second clamping member so that the CD is clamped incompletely. Furthermore, a space between the positioning member and the one second clamping member is increased so that the positioning member may be vibrated between the pair of second clamping members to generate unusual sounds.

To overcome the above drawback, one object of this invention is to provide a positional displacement compensating mechanism for compensating positional displacement between two members movable mutually.

### SUMMARY OF THE INVENTION

### How to attain the object

In order to attain the obj ects , a positional displacement compensating mechanism according to this invention comprises; a first member for clamping the recording medium; a second member for positioning the recording medium being inserted into the main body of said record medium playback device, mounted movably between a first position and a second position regarding the first member, wherein is provided a positional displacement compensating device for switching to a first condition to energize the second member toward the first position or to a second condition to energize the second member toward the second position, and maintaining a relative position of the second member to the first member in a predetermined range when the second member is energized toward the first position.

The positional displacement compensating mechanism mentioned above, wherein the positional displacement compensating device includes a torsion spring, one end and the center portion of which are mounted on the first member and the other end thereof abuts on the second member, for energizing the second member respectively toward the first position and the second position, and a supporting portion being mounted on the first member and for supporting, movably, the center portion of the torsion spring.

The positional displacement compensating mechanism mentioned above, wherein the supporting portion allows the center of the torsion spring to move freely along a direction in which the torsion spring energizes the second member toward the first position.

A recording medium playback device comprising the above positional displacement compensating mechanism, in which a recording medium is inserted into a main body to playback information recorded on the recording medium, wherein both first and second members together form part of a clamping playback device for clamping a recording medium inserted into the main body and playing back the information recorded on the recording medium, wherein the first member includes a pair of clamping members for clamping the recording medium and the second member is a positioning member for positioning the recording medium being inserted into the main body, wherein the first position is a positioning position for positioning the recording medium to abut on the recording medium inserted into the main body and the second position is a detached position for being parted from the positioned recording medium.

The recording medium playback device mentioned above, wherein the positional displacement compensating device includes a torsion spring, one end and center portion of which are mounted on the one clamping member and the other end thereof abuts on the positioning member to energize the positioning member respectively toward the detached position and the positioning position, and the center portion thereof abuts on the other clamping member when the pair of clamping members clamps a recording medium, and a supporting portion for supporting the center portion of the torsion spring movably along a direction in which the positioning member moves relatively against the one clamping member.

The recording medium playback device mentioned above, wherein the supporting portion allows the center of the torsion spring to move freely along a direction in which the torsion spring energizes the positioning member toward the detached position.

In the positional displacement compensating mechanism according to this invention, the positional displacement compensating device maintains a relative position between the first member and the second member in a predetermined range. Therefore, the relative position between the first member and the second member can be maintained constant, even if the first member and the second member have a dimensional deference or an error in assembling.

In the positional displacement compensating mechanism according to this invention, the positional displacement compensating device has a torsion spring for energizing the second member and a supporting portion for supporting the center portion of the torsion spring movably. Even if the first member and the second member have a dimensional deference or an error in assembling, the torsion spring can be deformed elastically and the position of the center portion of the torsion spring regarding the supporting portion can be changed so that the relative position between the first member and the second member can be maintained constant.

In the positional displacement compensating mechanism according to this invention, the center portion of the torsion spring can move along the direction in which the torsion spring energizes toward the first position. If the first member and the second member have a dimensional deference or an error in assembling, the center portion of the torsion spring moves along the direction in which the torsion spring energizes toward the first position. Therefore, the relative position between the first member and the second member can be maintained constant.

In the recording medium playback device according to this invention, the positional displacement compensating device maintains a relative position of the one clamping member and the positioning member in a predetermined range. Therefore, the relative position between the one clamping member and the positioning member can be maintained constant, even if the one clamping member and the positioning member have a dimensional deference or an error in assembling.

In the recording medium playback device according to this invention, the positional displacement compensating device includes a torsion spring for energizing the positioning member and a supporting portion for supporting the center portion of the torsion spring movably. When a recording medium is clamped, the center portion of the torsion spring abuts on the other clamping member. If the one clamping member and the positioning member have a dimensional deference or an error in assembling, the torsion spring is deformed elastically at the other end thereof which abuts on the positioning member. Therefore, it is prevented that the positioning member energizes the one clamping member over a requirement to be moved apart from the other clamping member when a recording medium is clamped.

If the one clamping member and the positioning member have a dimensional deference or an error in assembling, the position of the center portion of the torsion spring regarding the supporting portion is changed. When a recording medium is clamped, the positioning member is prevented from vibrating between the pair of clamping members by moving apart from the one clamping member. Therefore, the relative position between the one clamping member and the positioning member can be maintained constant.

In the recording medium playback device according to this invention, the center portion of the torsion spring can move along the direction in which the torsion spring energizes toward the detached position. If the one clamping member and the positioning member have a dimensional deference or an error in assembling, the center portion of the torsion spring moves along the direction in which the torsion spring energizes toward the detached position. Therefore, the relative position between the one clamping member and the positioning member can be maintained constant. Although the present invention has been fully described by way of examples with reference to the accompanying drawings, it is to be noted that various change and modifications can be made with the scope of the present invention.

### BRIEF DESCRIPTION OF THE DRAWINGS

Fig. 1 is a perspective view of a recording medium playback device according to the first embodiment of the invention;
Fig. 2 is a perspective view of a main body of the recording medium playback device shown in Fig. 1;
Fig. 3 is a perspective view from the other side of the main body of the recording medium playback device shown in Fig. 1;
Fig. 4 is a front view, showing a sliding member of the recording medium playback device shown in Fig. 1;
Fig. 5 is a side view, showing a clamping playback unit of the recording medium playback device shown in Fig. 1;
Fig. 6 is a drawing of condition in which no CD is inserted in the recording medium playback device shown in Fig. 1, viewing from the side;
Fig. 7 is a drawing of condition in which a CD is clamped by the clamping playback unit of the recording medium playback device shown in Fig. 1, viewing from the side;
Fig. 8 is a drawing of condition in which a locking member is moved in an unlock position of the recording medium playback device shown in Fig. 1, viewing from the side;
Fig. 9 is a plan view of the clamping playback unit shown in Fig. 5;
Fig. 10 is a plan view of a sensing member of the clamping playback unit shown in Fig. 5 and an expanded of the sensing member;
Fig. 11 is a sectional view taken along the line XI-XI in Fig. 10;
Fig. 12 is a sectional view taken along the line XII-XII in Fig. 10;
Fig. 13 is a plan view, showing a condition in which the large-diameter CD is positioned by the clamping playback unit shown in Fig. 9;
Fig. 14 is a side view, showing a condition in which the large-diameter CD is positioned by the clamping playback unit shown in Fig. 9;
Fig. 15 is a plan view, showing a condition in which the small-diameter CD is positioned by the clamping playback unit shown in Fig. 9;
Fig. 16 is a side view, showing a condition in which the small-diameter CD is positioned by the clamping playback unit shown in Fig. 9;
Fig. 17 is a plan view, showing a condition in which the sensing member shown in Fig. 10 is located in the detached position;
Fig. 18 is a sectional view taken along the line S-S in Fig. 17;
Fig. 19 is a sectional view taken along the line T-T in Fig. 17;
Fig. 20 is a side view, showing a condition in which the clamping playback unit shown in Fig. 5 clamps a CD;
Fig. 21 is a side view, showing a condition in which a space between a clamping arm and a carriage chassis is wider when the clamping playback unit shown in Fig. 5 clamps a CD;
Fig. 22 is a side view, showing a condition in which a space between a clamping arm and a carriage chassis is narrower when the clamping playback unit shown in Fig. 5 clamps a CD;
Fig. 23 is a plan view, showing a part of a recording medium playback device by prior art;
Fig. 24 is a sectional view taken along the line Z-Z in Fig. 23; and
Fig. 25 is a sectional view, showing a condition in which a boss of the recording medium playback device shown in Fig. 23 pushes up the positioning member.

### DESCRIPTION OF THE PREFERRED EMBODIMENT

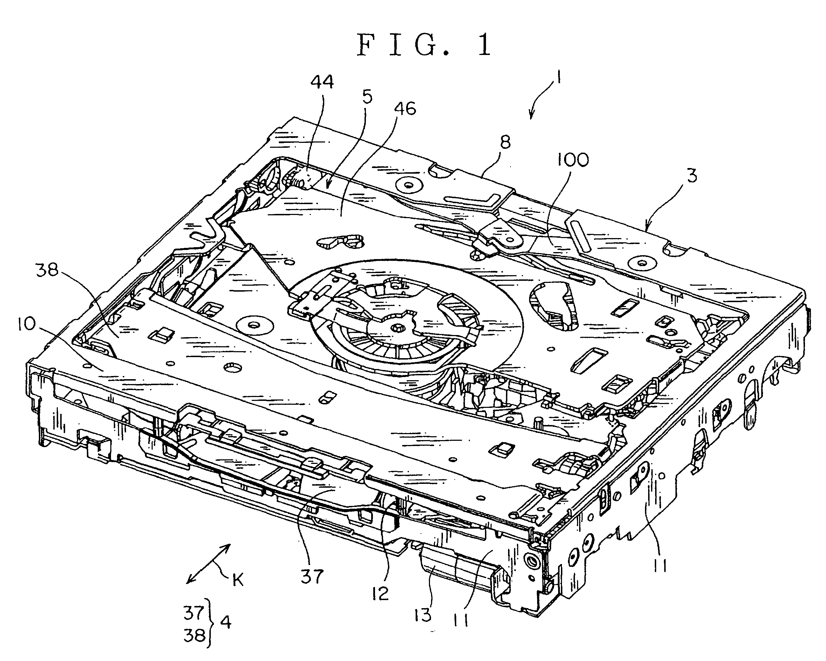

A recording medium playback device 1 of the first embodiment according to this invention will now be described with reference to Fig. 1 - 22. The recording medium playback device 1 shown in Fig. 1 may be mounted in a dashboard of a car as a vehicle.

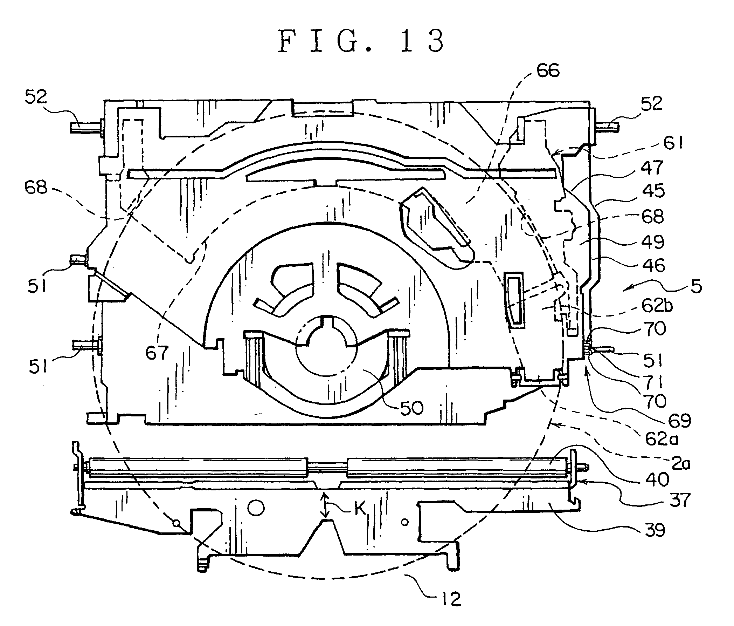

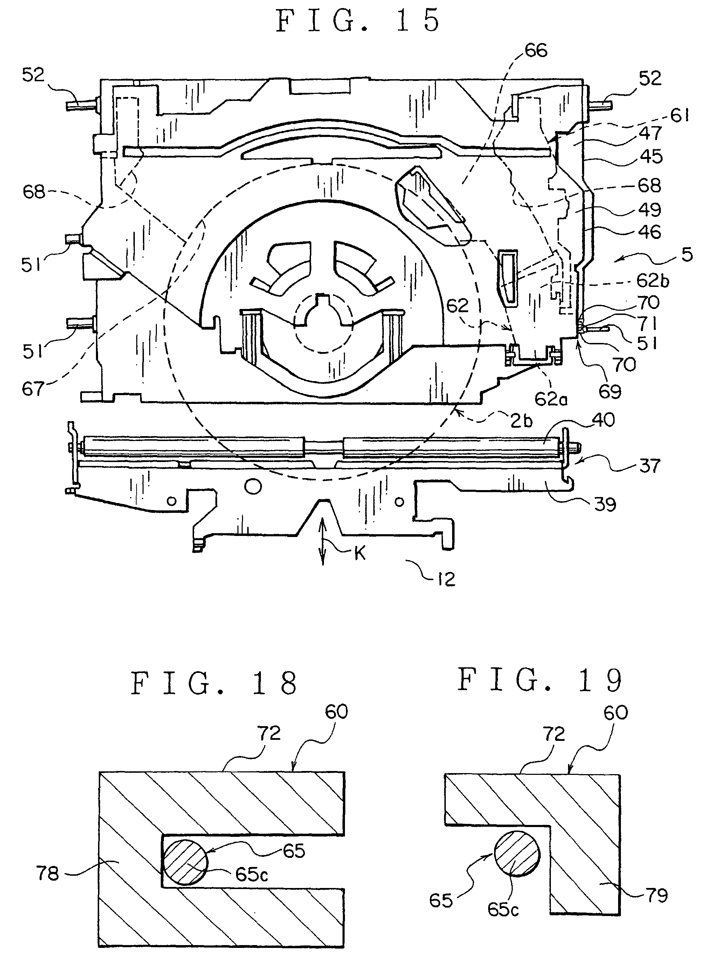

Regarding a recording medium playback device 1, a relatively large-diameter, for example 12cm, disc type recording medium CD 2a (shown in Fig. 13) or a relatively small-diameter, for example 8cm, disc type recording medium CD 2b (shown in Fig. 15) is selected by a user to be inserted into a later-described main body 3. Respective CDs 2a, 2b having different diameter of each is placed in a playback position of the main body 3 to playback information recorded on the CD 2a or 2b and output the information by sound.

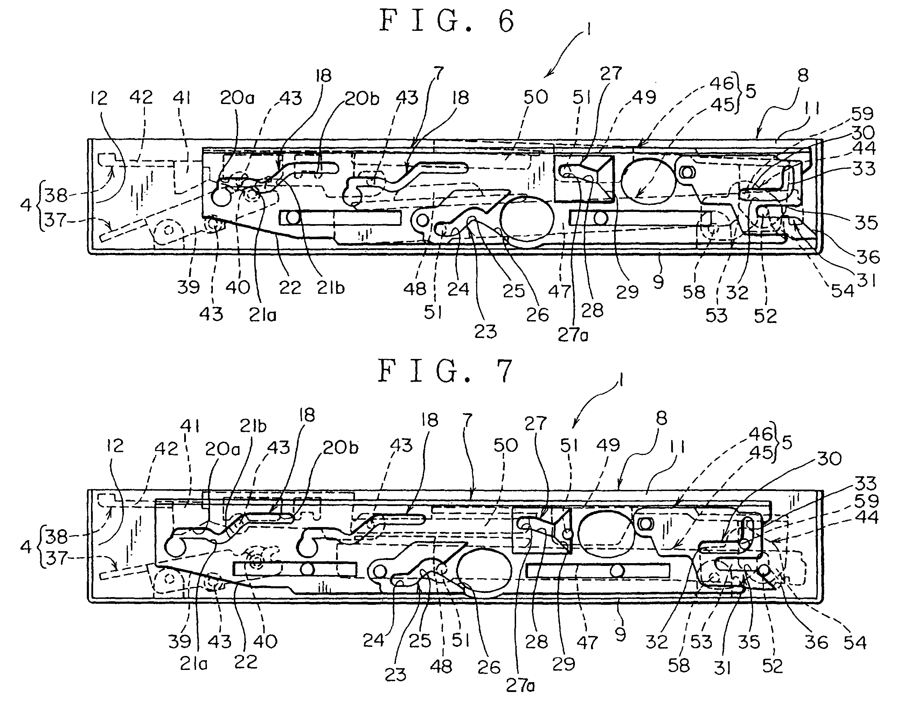

The recording medium playback device 1, as shown in Fig. 1, includes the main body 3, a carrying unit 4 as a carrying means (shown in Fig. 6-8), a pair of locking members 44 (shown in Fig. 6-8), a clamping playback unit 5 as a clamping playback device.

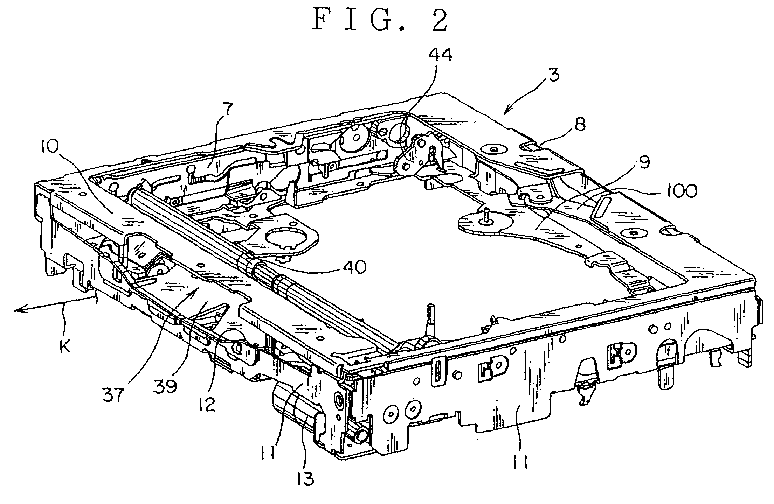

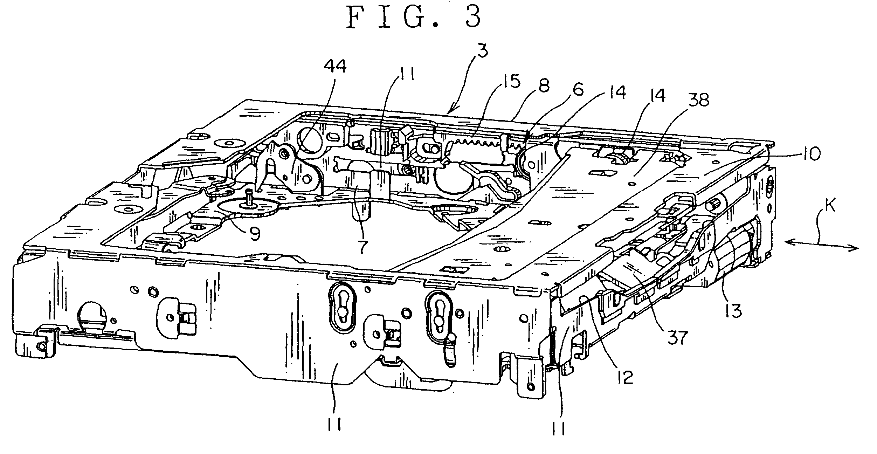

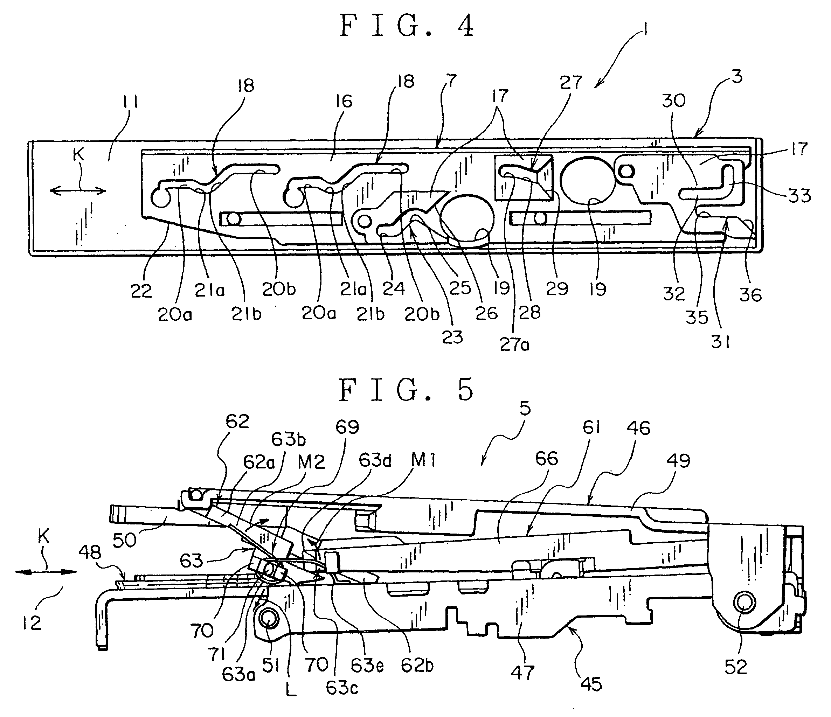

The main body 3 includes a chassis 8 (shown in Fig. 2, 3), a driving source portion 6 (shown in Fig. 3) and a pair of slide members 7 (shown in Fig. 4). The chassis 8, as shown in Fig. 2 and 3, is structured by combining a plurality of sheet metals. The chassis 8 is formed into flat box shape by bending the sheet metals.

The chassis 8, as shown in Fig. 2 and 3, has a flat bottom wall 9, a flat top wall 10 facing the bottom wall 9 with a distance and a plurality of side-walls 11 contiguous to the bottom wall 9 and the top wall 10. A plurality of openings is provided respectively on the walls 9, 10 and 11 for saving weight and keeping stiffness of the chassis 8.

A recording medium insertion opening 12 is formed in one side-wall 11, which is placed at this side in Fig. 1, of a plurality of side-walls 11. The recording medium insertion opening 12 passes through the one side-wall 11, The CD 2a or 2b can pass along an arrow K in Fig. 1 through the recording medium insertion opening 12. The CD 2a or 2b is inserted into the main body 3 or is ejected from the main body 3 through the recording medium insertion opening 12.

The driving source portion 6 is mounted in the vicinity of the other side-wall 11 (located at that side in Fig. 3) contiguous to the one side-wall 11 having the recording medium insertion opening 12. The driving source portion 6 includes a motor 13 as a driving source and a plurality of gears 14, as shown in Fig. 3. The motor 13 is mounted on the chassis 8. The motor 13 performs as a driving source of the carrying unit 4.

A not-shown pinion is mounted on an output shaft of the motor 13. The plurality of gears 14 is respectively mounted rotatably on the side-wall 11. The gears 14 are meshed mutually and one of the gears 14 is meshed with the pinion.

The pair of slide members 7 is mounted respectively on a pair of the side-walls 11 contiguous to the one side-wall 11 having the recording medium insertion opening 12. The slide members 7 are mounted slidably along the arrow K on the side-walls 11. Therefore, the slide members 7 are slidable along a direction of inserting and ejecting the CDs 2a, 2b (called carrying direction below).

One slide member 7, at that side in Fig. 3, of the pair of slide members 7 is provided with a rack 15. The rack 15 is pushed toward the one side-wall 11 having the recording medium insertion opening 12 by a later-described sensing member 60 when the CD 2a or 2b is inserted into the main body 3 through the recording medium insertion opening 12.

When the rack 15 is pushed toward the one side-wall 11 by the sensing member 60, the rack is meshed with one gear 14. The pair of slide members 7 is slid synchronously corresponding to the side-walls 11 by a link 100 (shown in Fig. 1). Thus, the pair of slide members 7 is moved simultaneously close to or apart from the recording medium insertion opening 12.

The one slide member 7, mounted on the side-wall 11 of that side in Fig. 2, includes a sheet metal portion 16 and a plastic portion 17, as shown in Fig. 4. The sheet metal portion 16 is formed into band plate shape. The sheet metal portion 16 is mounted slidably along the arrow K in Fig. 4 on the side-wall 11. A longer direction of the sheet metal portion 16 is along a longer direction of the side-wall 11.

The plastic portion 17 is formed into rectangular solid of a low friction-coefficient synthetic resin. Three plastic portions 7 are mounted on the sheet metal portion 16. The three plastic portions 17 are respectively mounted at center area of a longer direction of the sheet metal portion 16 and at end area, apart from the recording medium insertion opening 12, of the sheet metal portion 16 and between the center area and end area of the sheet metal portion 16.

The sheet metal portion 16 has a pair of guide holes 18 and a pair of holes 19. The holes 18, 19 penetrate the sheet metal portion 16. The pair of guide holes 18 are provided at end area, in the vicinity of the recording medium insertion opening 12, of the sheet metal portion 16. The pair of guide holes 18 are placed at an interval of each along the longer direction of the sheet metal portion 16.

Each of the guide holes 18 has a pair of horizontal long portions 20a, 20b and a pair of slant long portions 21a, 21b. The guide hole 18 is provided, in sequence from near side of the recording medium insertion opening 12, with one horizontal long portion 20a, one slant long portion 21a, the other slant long portion 21b and the other horizontal long portion 20b. The one horizontal long portion 20a, the one slant long portion 21a, the other slant long portion 21b and the other horizontal long portion 20b are connected mutually in series.

Both horizontal long portions 20a, 20b extend along a sliding direction (arrow K) of the sheet metal portion 16, i.e. the slide member 7. The one horizontal long portion 20a is placed below the other horizontal long portion 20b in Fig. 4. Both slant long portions 21a, 21b extend along a direction crossing sliding direction (arrow K) of the sheet metal portion 16, i.e. the slide member 7.

The one slant long portion 21a extends downward gradually in proportion to leaving from the one horizontal long portion 20a. The other slant long portion 21b extends upward gradually in proportion to leaving from the one slant long portion 21a and nearing the other horizontal long portion 20b.

The one hole 19 is provided between the plastic portion 17, mounted in the center area of the sheet metal portion 16, and the plastic portion 17, mounted between the center area and the end area of the sheet metal portion 16, along a longer direction of the sheet metal portion 16. The other hole 19 is provided between the plastic portion 17, mounted between the center area and the end area and the plastic portion 17, mounted at the end area of the sheet metal portion 16, along the longer direction of the sheet metal portion 16.

A slant guide surface 22 is provided at end area, in the vicinity of the recording medium insertion opening 12, of the sheet metal portion 16. The slant guide surface 22 is sloped to sliding direction of the slide member 7 to go upward gradually in proportion to nearing the recording medium insertion opening 12.

The plastic portion 17, mounted in the center area of the sheet metal portion 16, is provided with a first guide groove 23. The first guide groove 23 is formed concavely from an inner surface, regarding the main body 3, of the plastic portion 17. The first guide groove 23 has a horizontal portion 24, an upwardly slant portion 25 and a widening portion 26. The horizontal portion 24, the upwardly slant portion 25 and the widening portion 26 are provided in order, contiguously to each other, along the sliding direction of the slide member 7 in proportion to leaving from the recording medium insertion opening 12.

The horizontal portion 24 extends along the sliding direction of the slide member 7. The upwardly slant portion 25 is sloped to sliding direction of the slide member 7 to go upward gradually in proportion to leaving from the horizontal portion 24, i.e. the recording medium insertion opening 12. The widening portion 26 is formed to have gradually wider width perpendicular to sliding direction of the slide member 7 in proportion to leaving from the upwardly slant portion 25, i.e. the recording medium insertion opening 12. The widening portion 26 has an almost same width, at end portion thereof apart from the recording medium insertion opening 12, as the width of the hole 19.

The plastic portion 17, mounted between the center area and the end area of the sheet metal portion 16, is provided with a second guide groove 27. The second guide groove 27 is formed concavely from an inner surface, regarding the main body 3, of the plastic portion 17. The second guide groove 27 has a horizontal portion 27a, a downwardly slant portion 28 and a widening portion 29. The horizontal portion 27a, the downwardly slant portion 28 and the widening portion 29 are provided in order, contiguously to each other, along the sliding direction of the slide member 7 in proportion to leaving from the recording medium insertion opening 12.

The horizontal portion 27a extends along the sliding direction of the slide member 7. The downwardly slant portion 28 is sloped to sliding direction of the slide member 7 to go downward gradually in proportion to leaving from the recording medium insertion opening 12. The widening portion 29 is formed to have gradually wider width perpendicular to sliding direction of the slide member 7 in proportion to leaving from the downwardly slant portion 28, i.e. the recording medium insertion opening 12. The widening portion 29 has an almost same width, at end portion thereof apart from the recording medium insertion opening 12, as the width of the hole 19.

The plastic portion 17, mounted at end area of the sheet metal portion 16, is provided with a locking guide groove 30 and a locking concave groove 31. The locking guide groove 30 and the locking concave groove 31 are formed concavely from an inner surface, regarding the main body 3, of the plastic portion 17. The locking guide groove 30 is provided above the locking concave groove 31. The locking guide groove 30 has a slide long portion 32 and a cross long portion 33.

The slide long portion 32 and the cross long portion 33 are provided in order, contiguously to each other, along the sliding direction of the slide member 7 in proportion to leaving from the recording medium insertion opening 12.

The slide long portion 32 extends along the sliding direction of the slide member 7. The cross long portion 33 extends upwardly from the slide long portion 32. The cross long portion 33 extends along a direction crossing the sliding direction of the slide member 7 from the slide long portion 32.

The locking concave groove 31 has a horizontal long portion 35 and a widening portion 36. The horizontal long portion 35 and the widening portion 36 are provided in order, contiguously to each other, along the sliding direction of the slide member 7 in proportion to leaving from the recording medium insertion opening 12.

The horizontal long portion 35 extends along the sliding direction of the slide member 7. The widening portion 36 is formed to have gradually wider width perpendicular to the sliding direction of the slide member 7 in proportion to leaving from the horizontal long portion 35, i.e. the recording medium insertion opening 12.

Thus, the sheet metal portion16 has the pair of the guide holes 18, the pair of the holes 19 and the slant guide surface 22. And the plastic portions 17 have the first guide groove 23, the second guide groove 27, the locking guide groove 30 and the locking concave groove 31. Therefore, the slide member 7 includes the pair of the guide holes 18, the pair of the holes 19, the slant guide surface 22, the first guide groove 23, the second guide groove 27, the locking guide groove 30 and the locking concave groove 31.

The carrying unit 4, as shown in Fig. 6-8, has a roller arm 37 and a disc guide 38. The roller arm 37 is provided in the vicinity of the recording medium insertion opening 12. The roller arm 37 includes an arm body 39 having a sheet metal and a roller 40.

The arm body 39 is formed at a loner direction thereof into band shape along a direction of width of the chassis 8. The arm body 39 is mounted rotatably around one end of the width thereof on the bottom wall 9. The rotation center axis of the arm body 39 is along a direction of width of the chassis 8. The arm body 39 is energized in a direction to move the other end of a longer direction thereof apart from the bottom wall 9 by a not-shown coil spring.

The roller 40 is mounted rotatably on the other end of the arm body 39. The rotation center axis of the roller 40 is along the direction of width of the chassis 8. The roller 40 is provided, at end thereof, with a not-shown gear. When the other end of the arm body 39 is apart from the bottom wall 9, the gear of the roller 40 meshes with one of the gears 14 in the driving source portion 6. The roller 40 is rotated with the gears 14 by turning force of the motor 13.

The disc guide 38 has a guide body 41 including a sheet metal and a slide member 42 mounted on the guide body 41. The guide body 41 is formed at a longer direction into band shape along the direction of width of the chassis 8. The guide body 41 is mounted slidably in a vertical direction on the chassis 8 with a later-described pin 43 and the guide hole 18 for inserting the pin 43. The slide member 42 is made of a low friction-coefficient synthetic resin. The slide member 42 is formed into thin plate shape. The slide member 42 is mounted on the inner surface, regarding the chassis 8, of the guide body 41.

The roller arm 37 and the disc guide 38 have respectively the pin 43. The pin 43 of the roller arm 37 projects from an end, located in that side in Fig. 1, 2 and in a direction of width, of the arm body 39, toward the side-wall 11 having the slide member 7. The pin 43 of the roller arm 37 is contacted with the slant guide surface 22 of the slide member 7 by energizing the arm body 39 with a not-shown coil spring.

A pair of pins 43 of the disc guide 38 is provided at an end in a direction of width of the guide body 41, in that side in Fig. 1 and 2. The one pin 43 of the disc guide 38 is provided at an end of a direction of width of the guide body 41, in this side in Fig. 1 and 2. The pins 43 project from the guide body 41 toward the side-wall 11. The pair of pins 43 of the disc guide 38, provided at the end in a direction of width of the guide body 41 in that side in Fig. 1 and 2, go respectively through the guide holes 18.

The locking members 44 are located respectively in the vicinity of each side-wall 11 having the slide member 7. The locking members 44 are located in the vicinity of the side-wall 11 corresponding to the one side-wall having the recording medium insertion opening 12.

Each of the locking members 44 includes a thin sheet metal and is provided integrally with a locking body 53 formed into rectangular in plan view, a hook-shaped hooking portion 54 and a third pin 59. The hooking portion 54 extends from one end edge of the locking body 53 to be apart therefrom and then extends along the one end edge of the locking body 53.

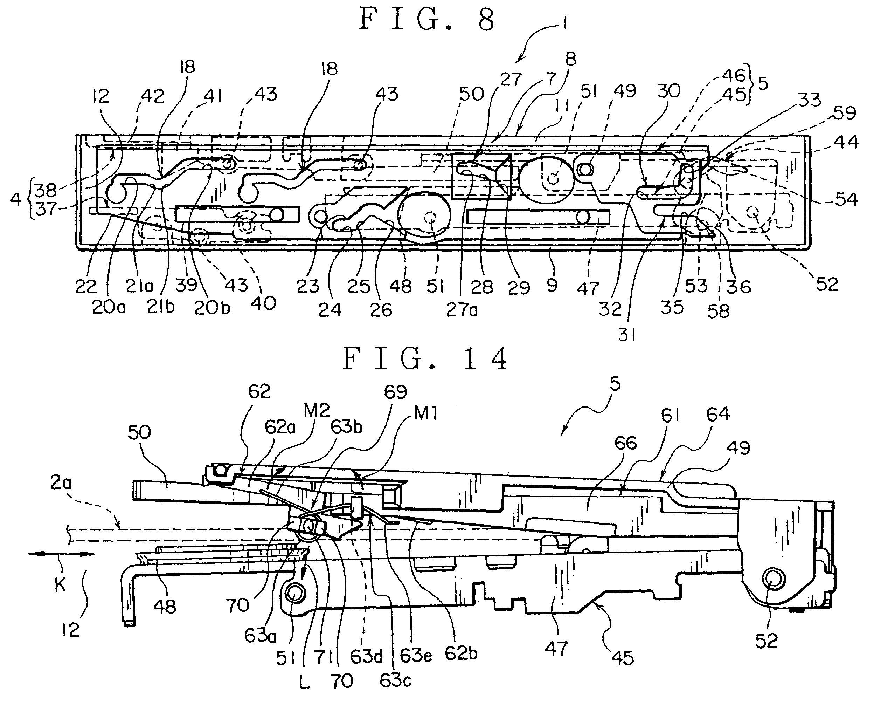

The locking member 44 is mounted rotatably around an end 58, apart from the hooking portion 54, of the locking body 53 on the bottom wall 9. The locking member 44 can rotate around the end 58 so that The locking member 44 moves between a lock position, in which a later-described locking pin 52 is locked by the hooking portion 54 as shown in Fig. 6, and an unlock position, in which locking pin 52 is unlocked by the hooking portion 54 as shown in Fig. 8.

The third pin 59 projects from the locking body 53 toward the sliding member 7. The third pin 59 is in the locking guide groove 30 between the lock position and the unlock position.

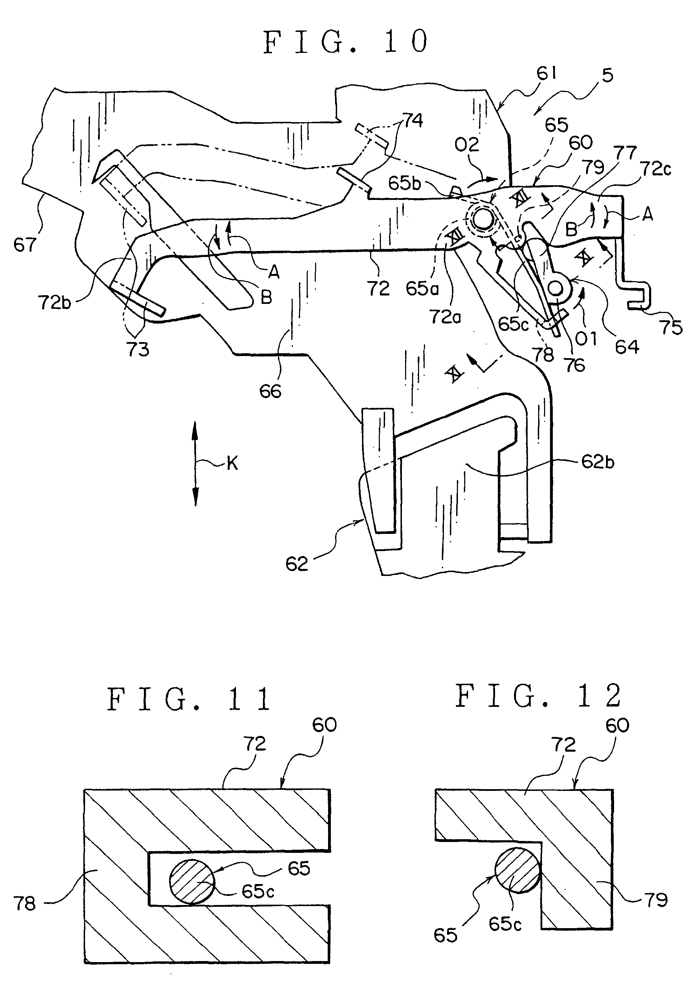

The clamping playback unit 5 includes a carriage chassis 45, a clamping arm 46, a positioning member 61, a CD sensing member 62, a torsion spring 63, a sensing member 60 (shown in Fig. 10), a cam member 64 (shown in Fig. 10) and a second torsion spring 65 (shown in Fig. 10).

The carriage chassis 45 includes a chassis body 47 having a sheet metal, a turning table 48 mounted on the chassis body 47 and a not-shown optical pickup portion mounted on the chassis body 47. The chassis body 47 is formed into flat plate.

The turning table 48 is mounted rotatably on the chassis body 47. The turning table 48 penetrates into a center hole of CD 2a or 2b. The turning table 48 rotates CD 2a or 2b by driving force of a motor. The optical pickup portion includes an optical pickup for reading information recorded on the CD 2a or 2b and a pickup carrying mechanism for moving the optical pickup close to or apart from the turning table 48.

The clamping arm 46 includes an arm body 49 having a sheet metal and a clamper 50. The arm body 49 is formed into flat plate shape. The arm body 49 is mounted rotatably around an end thereof, apart from the recording medium insertion opening 12, on the chassis body 47 of the carriage chassis 45. The rotation center axis of the arm body 49 is along the direction of width of the chassis 8. When the arm body 49 is in the vicinity of the chassis body 47, the arm body 49 is almost parallel to the chassis body 47.

The clamper 50 is located correspondingly to the turning table 48. The clamper 50 is formed into disk shape and mounted rotatably on the arm body 49. When the arm body 49 is almost parallel to the chassis body 47, CD 2a or 2b can be clamped between the turning table 48 and the clamper 50. A position for clamping CDs 2a, 2b between the turning table 48 and the clamper 50 is defined as the playback position herein. The carrying path, as mentioned above, is between the recording medium insertion opening 12 and the playback position.

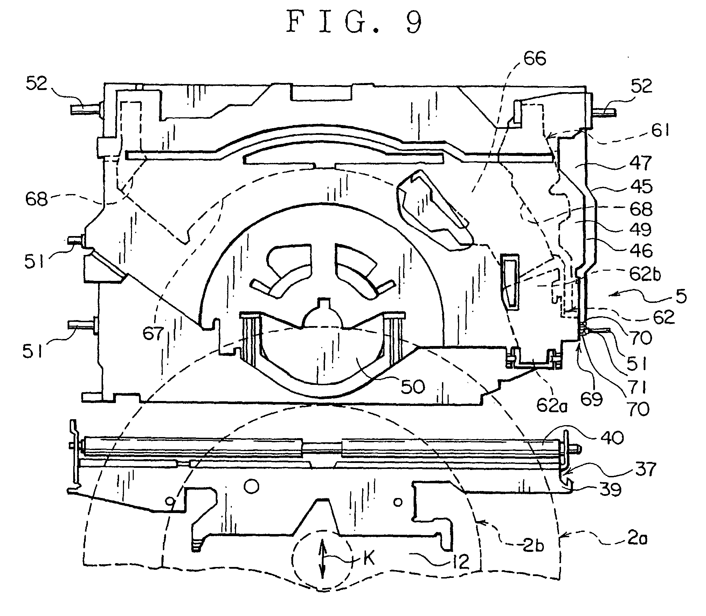

The positioning member 61 is located between the carriage chassis 45 and the clamping arm 46, as shown in Fig. 5. The positioning member 61, a shown in Fig. 9, includes a member body 66 formed into arch-shaped plate in plan view, a small-diameter CD positioning portion 67 and a large-diameter CD positioning portion 68. The member body 66 is located coaxially to both of the turning table 48 and the clamper 50. The member body 66 is mounted rotatably around an end thereof, apart from the recording medium insertion opening 12, on the arm body 49.

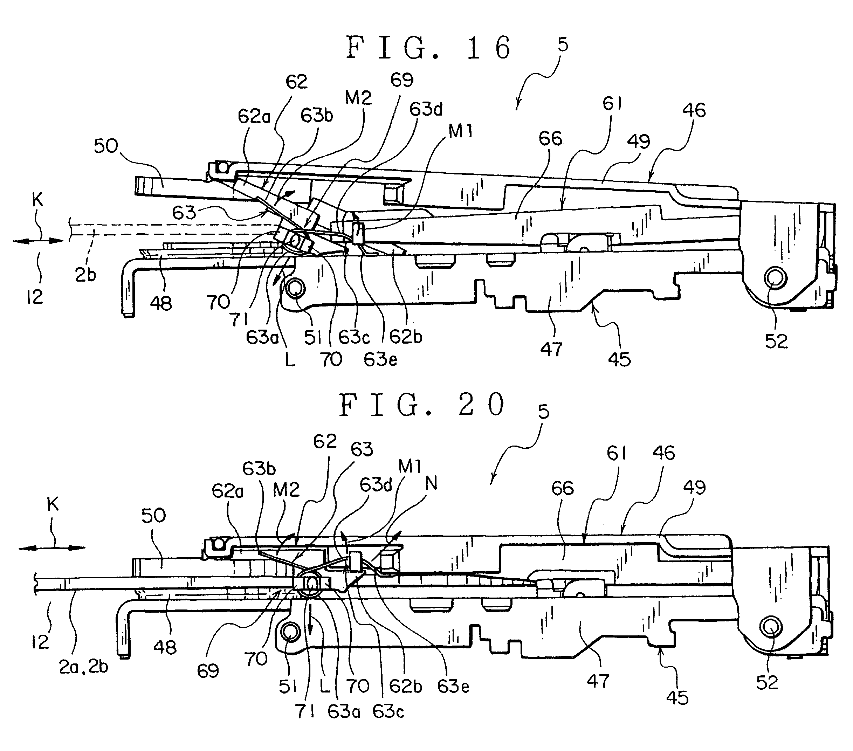

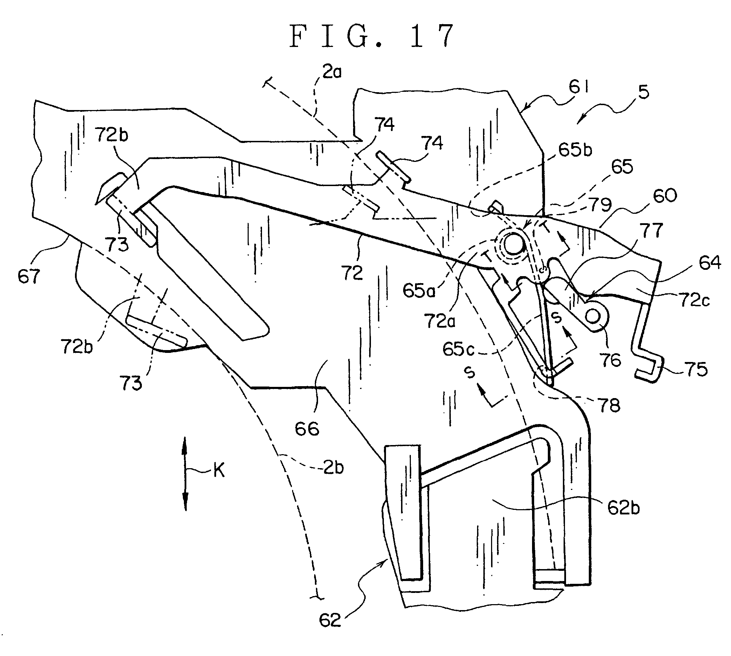

Therefore, the positioning member 61 is supported by the clamping arm 46, movably between a positioning position for positioning the small-diameter CD 2b to be apart from the arm body 49 as shown in Fig. 5 and a detached position for moving apart from a positioned CD 2a or 2b to be close to the arm body 49 as shown in Fig. 20. The positioning member 61 is supported by the clamping arm 46, movably between a first location for positioning the small-diameter CD 2b as shown in Fig. 16 and a second location for positioning the large-diameter CD 2a as shown in Fig. 14. The first location and the positioning position are the same position. The second location and the detached position are deferent positions.

In the positioning position (the first location), a small-diameter CD 2b inserted through the recording medium insertion opening 12 can be abut on the small-diameter CD positioning portion 67. In the second location, a large-diameter CD 2a inserted through the recording medium insertion opening 12 can be abut on the large-diameter CD positioning portion 68. In the detached position, the CDs 2a and 2b are apart from both positioning portions 67 and 68. The detached position corresponds to the first position as mentioned above and the positioning position corresponds to the second position as mentioned above.

The small-diameter CD positioning portion 67 is an arc-shaped inner edge of the member body 66, as shown in Fig. 9. The small-diameter CD positioning portion 67 can abut on the small-diameter CD 2b inserted through the recording medium insertion opening 12 when the other later-described end 62b of the CD sensing member 62 is apart from the arm body 49 (the first location, positioning position). The small-diameter CD positioning portion 67 positions the small-diameter CD 2b in the playback position by abutting on the small-diameter CD 2b.

The large-diameter CD positioning portion 68 projects from the member body 66 toward the carriage chassis 45. The large-diameter CD positioning portion 68 is formed into an arc shape coaxial with the turning table 48, the clamper 50 and the small-diameter CD positioning portion 67. The large-diameter CD positioning portion 68 can abut on the large-diameter CD 2a inserted through the recording medium insertion opening 12 when the other later-described end 62b of the CD sensing member 62 is close to the arm body 49 (the second location). The large-diameter CD positioning portion 68 positions the large-diameter CD 2a in the playback position by abutting on the large-diameter CD 2a.

The positioning member as structured above corresponds to the second member described in claims 1 or 3, and the first member described in claim 4.

The CD sensing member 62 is formed into rectangular plate in plan view. The CD sensing member 62 is located in the chassis 8 at side area in the direction of width of the recording medium insertion opening 12. The CD sensing member 62 is placed to abut on the large-diameter CD inserted through the recording medium insertion opening 12 and not to abut on the small-diameter CD inserted through the recording medium insertion opening 12.

The CD sensing member 62 is supported by the arm body 49 of the clamping arm 46, rotatably around one end 62a thereof. Therefore, the CD sensing member can move the other end 62b close to the arm body 49 or apart from the arm body 49. The CD sensing member is provided so that the one end 62a is closer to the recording medium insertion opening 12 than the other end 62b.

The one end 62a of the CD sensing member 62 is engaged with the member body 66 of the positioning member 61. Therefore, the member body 66 of the positioning member 61 moves apart from the arm body 49 when the other end 62b of the CD sensing member 62 moves apart from the arm body 49. When the other end 62b of the CD sensing member 62 moves close to the arm body 49, the member body 66 of the positioning member 61 moves close to the arm body 49

The CD sensing member 62 is provided, in the center area of a longer direction thereof, with a supporting portion 69. The supporting portion 69 has a pair of clicks 70 located along the carrying direction K with a space of each and a supporting pin 71 located between the clicks 70. The clicks 70 project outwardly from the CD sensing member 62 along the direction of width of the chassis 8. The clicks 70 are formed into hook shape so that the ends, apart from the CD sensing member 62, are close mutually. The supporting pin 71 is formed into cylindrical shape to project outwardly from the CD sensing member 62 along the direction of width of the chassis 8.

The supporting pin 71 is set through a coil portion 63a (center portion) of the torsion spring 63 and the click 70 is engaged with an outside of the coil portion 63a (center portion) so that the torsion spring 63 is mounted on the supporting portion 69. The supporting portion 69 supports the center portion 63a movably along a direction in which the torsion spring 63 energizes the positioning member 61 toward the detached position as describing later.

The center portion 63a of the torsion spring 63 is mounted on the supporting portion 69. One end 63b of the torsion spring 63 is fixed on the CD sensing member 62. The CD sensing member 62 is mounted on the clamping arm 46 so that the center portion 63a and the one end 63b of the torsion spring 63 are mounted through the CD sensing member 62 on the clamping arm 46.

The torsion spring 63 is provided, at the other end 63c thereof with an elbow portion 63d. An end portion 63e extends from the elbow portion 63d of the other end 63c toward an opposite direction of a later-described arrow M1. The end portion 63e of the other end 63c of the torsion spring 63 abuts on the positioning member 61. The torsion spring 63 is placed to generate elastic restoring forces along arrows M1, M2 in Fig. 5 for moving the both ends 63b, 63c close to each other and to generate an elastic restoring force for moving the center portion 63a along an arrows L in Fig. 5 apart from the clamping arm 46.

When the carriage chassis 45 and the clamping arm 46 are neared to each other as shown in Fig. 20, the center portion 63a of the torsion spring 63 abuts on the carriage chassis 45. The center portion 63a is fixed and the elastic restoring force along the arrow L is generated so that the other end 63c energizes the positioning member 61 along an arrow N in Fig. 20 toward the clamping arm 46. In other words, the torsion spring 63 energizes the positioning member 61 toward the detached position.

When the carriage chassis 45 and the clamping arm 46 are moved apart from each other as shown in Fig. 5, the center portion 63a of the torsion spring 63 moves apart from the carriage chassis 45. Then, the center portion 63a is allowed to move and the elastic restoring forces along the arrows M1, M2 are generated. The elastic restoring forces work to move the both ends 63b, 63c close to each other. Therefore, the torsion spring 63 energizes the positioning member 61 toward the positioning position and the other end 62b energizes the CD sensing member 62 to be apart from the arm body 49 of the clamping arm 46.

Thus, the torsion spring 63 can be switched between a first condition of energizing the positioning member 61 toward the detached position and a second condition of energizing the positioning member 61 toward the positioning position.

The sensing member 60 is placed in deep area of the main body 3 farther along the carrying direction K then the CD sensing member 62 from the recording medium insertion opening 12. The sensing member 60 includes a member body 72, a small-diameter CD contact portion 73, a large-diameter CD contact portion 74 and a rack pushing portion 75, as shown in Fig. 10. The member body 72 is formed into a unidirectionally extending arm shape. The member body 72 is supported by the positioning member 61 to place a longer direction thereof along the direction of width of the main body 3. The member body 72 is supported rotatably around the center portion 72a by the positioning member 61.

The small-diameter CD contact portion 73 is provided on an edge of the one end 72b of the member body 72 which is located at an inner side, along the direction of width of the main body 3, of the main body 3. The small-diameter CD contact portion 73 can abut on the small-diameter CD 2b inserted through the recording medium insertion opening 12. The large-diameter CD contact portion 74 is located between the small-diameter CD contact portion 73, i.e. the one end 72b of the member body 72, and the center portion 72a. The large-diameter CD contact portion 74 can abut on the large-diameter CD 2a inserted through the recording medium insertion opening 12.

The rack pushing portion 75 is provided at the other end 72c of the member body 72. The rack pushing portion 75 abuts on the rack 15 and pushes the rack 15 toward the recording medium insertion opening 12.

The sensing member 60 has a spring contact portion 78 and a spring contact piece 79. The spring contact portion 78 extends from the center portion 72a of the member body 72 toward the recording medium insertion opening 12. The spring contact portion 78 is located at a more inner side along the direction of width of the main body 3 than the other end 65c of the second torsion spring 65.

The sensing member 60, structured as mentioned above, is supported rotatably between a touching position shown with a solid line in Fig. 10 and a detached position shown with an alternate-long-and-two-short-dashes line in Fig. 10 by the positioning member 61. In other words, the sensing member 60 is rotatable in one direction along an arrow A in Fig. 10 and in the other direction, opposite to the one direction, along an arrow B in Fig. 10.

In the touching position, respective contact portions 73, 74, i.e. the one end 72b, project from the positioning positions 67, 68 toward the recording medium insertion opening 12 so that the one end 72b can abut on the CDs 2b, 2a. In the touching position, the spring contact portion 78 is apart from the second torsion spring 65 as shown in Fig. 11 and the spring contact piece 79 abuts on the other end 65c of the second torsion spring 65 as shown in Fig. 12.

In the detached position, the one end 72b is moved from the positioning positions 67, 68 and then the one end 72b moves apart from the CDs 2b, 2a. In the detached position, the rack pushing portion 75, i.e. the other end 72c, pushes the rack 15 toward the recording medium insertion opening 12 to mash the rack 15 with the one gear 14. In the detached position, the spring contact portion 78 abuts on the other end 65c of the second torsion spring 65 as shown in Fig. 18 and the spring contact piece 79 is apart from the other end 65c of the second torsion spring 65 as shown in Fig. 19.

The sensing member 60, structured as mentioned above, corresponds to a second member described in claim 4. The detached position corresponds to the first position mentioned above and the touching position corresponds to the second position mentioned above.

The cam member 64 is located between the other end 72c of the sensing member 60 and the CD sensing member 62. The cam member 64 is mounted rotatably on the arm body 49 of the clamping arm 46. A rotation center axis of the cam member 64 is parallel to a rotation center axis of the sensing member 60. The cam member 64 rotates to be abutted by a not-shown projecting portion provided on the carriage chassis 45.

The cam member 64 has a center portion 76 located in the vicinity of the rotation center and a pushing portion 77. The pushing portion 77 projects outwardly from the center portion 76. The pushing portion 77 abuts on the other end 72c of the sensing member 60 between the touching position and the detached position. In the detached position, the pushing portion 77 abuts on the other end 65c of the second torsion spring 65.

The coil portion (the center portion 65a) of the second torsion spring 65 is mounted in the rotation center of the member body 72 of the sensing member 60. The one end 65b of the second torsion spring 65 is fixed on the positioning member 61. The other end 65c of the second torsion spring 65 passes a gap between the cam member 64 and the spring contact portion 78, and can abut on the spring contact portion 78 and the spring contact piece 79.

The second torsion spring 65 is placed to generate an elastic restoring force for moving the both ends 65b and 65c along arrows 01 and 02 in Fig. 10 close to each other. When the sensing member 60 is pushed along an arrow A in Fig. 10 as one direction, the cam member 64 is rotated in proportion to moving the carriage chassis 45 and the second torsion spring 65 is pushed by the pushing portion 77. Then, the other end 72c moves apart from the spring contact piece 79 and abuts on the spring contact portion 78. An elastic restoring force for energizing the sensing member 60 along the arrow A is generated. In other words , the second torsion spring 65 energizes the sensing member 60 along the arrow A.

When the sensing member 60 is moved along an arrow B in Fig. 10 as the other direction, pushing force on the cam member 64 by the pushing portion 77 is removed in proportion to moving the carriage chassis 45 and then the other end 65c of the second torsion spring 65 is moved apart from the spring contact portion 78 and abuts on the spring contact piece 79. Thereby, an elastic restoring force for energizing the sensing member 60 along the arrow B is generated.. In other words, the second torsion spring 65 energizes the sensing member 60 along the arrow B.

Thus, the second torsion spring 65 can be switched between a first condition of energizing the sensing member 60 along the arrow A toward the detached position and a second condition of energizing the sensing member 60 along the arrow B toward the touching position. The second torsion spring 65 energizes the sensing member 60 toward the detached position when the sensing member 60 is rotated along the arrow A and energizes the sensing member 60 toward the touching position when the sensing member 60 is rotated along the arrow B. The arrow A corresponds to the one direction and the arrow B corresponds to the other direction herein.

The clamping playback unit 5, structured as mentioned above, is mounted movably regarding the main body 3 in the chassis 8 with a not-shown damper made of an elastic solid such as a rubber and a coil spring. In the clamping playback unit 5, the CD 2a or 2b is clamped between the turning table 48 and the clamper 50, and is rotated by the turning table 48, and information on the CD 2a or 2b is read out by the optical pickup portion.

When the main body 3 is vibrated by vibration of the running car, the clamping playback unit 5 is moved correspondingly to the chassis 8 by the damper and the coil spring. Thus, the damper and the coil spring prevent a bad influence by vibration of the running car to read out information from the CDs 2a, 2b. The clamping playback unit 5 has gradually wider movable range regarding the main body 3 in proportion to disengaging gradually a hook 54 with a later-described locking pin 52.

The carriage chassis 45 and the clamping arm 46 have respectively a second pin 51. The second pins 51 of the carriage chassis 45 project from the both ends in a direction of width of the chassis body 47, located in that side in Fig. 1 and this side in Fig. 2, toward the respective side-walls 11. When the locking member 44 is placed in a later-described lock position, the second pins 51 of the carriage chassis 45 penetrate into the first guide groove 23. When the locking member 44 is placed in a later-described unlock position, the second pins 51 of the carriage chassis 45 escape from the first guide groove 23.

The second pin 51 of the clamping arm 46 projects from the end in a direction of width of the arm body 49, located in that side in Fig. 1 and 2, toward the side-wall 11 having the slide member 7. When the locking member 44 is placed in the lock position, the second pin 51 of the clamping arm 46 penetrates into the second guide groove 27. When the locking member 44 is placed in the unlock position, the second pin 51 of the clamping arm 46 escapes from the second guide groove 27.

Furthermore, the carriage chassis 45 has locking pins 52. The locking pins 52 project from the both ends of the chassis body 47 of the carriage chassis 45 toward the respective side-walls 11 having the slide member 7. The locking pins 52 are located in the rotation center of rotating the arm body 49 correspondingly to the chassis body 47. When the locking member 44 is placed in the lock position, the locking pins 52 penetrate into the respective locking concave grooves 31. When the locking member 44 is placed in the unlock position, the locking pins 52 of the carriage chassis 45 escape from the respective locking concave grooves 31.

The carriage chassis 45 and the clamping arm 46, structured as mentioned above, correspond to the clamping members herein. The clamping arm 46 corresponds to the one clamping member mentioned above and the first member described in claims 1 and 3. The carriage chassis 45 corresponds to the other clamping member herein. Then, the clamping playback unit 5 has a pair of the clamping members.

The slice member 7, the pin 43, the second pin 51 and the third pin 59 structure an interlocking member. The CD 2a or 2b, carried by the roller arm 37 and the disc guide 38 of the carrying unit 4, is clamped by the carriage chassis 45 and the clamping arm 46 of the clamping playback unit 5, as described later.

The interlocking member, structured as mentioned above, moves the roller arm 37 and the disc guide 38 gradually apart from the CD 2a or 2b, and moves the locking member 44 gradually from the lock position to the unlock position to prevent the CD 2a or 2b contacting with the roller arm 37 and the disc guide 38.

The locking pin 52, the locking member 44 and the locking concave groove 31 perform as a locking unit. The locking unit can move between a lock position, in which the clamping playback unit 5 is locked regarding the main body 3, and an unlock position, in which the clamping playback unit 5 is unlocked to be movable regarding the main body 3.

The torsion spring 63 and the supporting portion 69 perform as a positional displacement compensating device mentioned above. The second torsion spring 65 corresponds to the second positional displacement compensating device mentioned above.

Action of the recording medium playback device 1, structured as mentioned above, will be described herein. The slide member 7 is located most apart from the recording medium insertion opening 12 when the CD 2a or 2b is not inserted in the main body 3, as shown in Fig. 6. The pin 43 of the roller arm 37 abuts on an end, near the recording medium insertion opening 12, of the slant guide surface 22. The pin 43 of the disc guide 38 is located in the horizontal long portion 20a. Thus, the roller arm 37 and the disc guide 38 are close to each other. The gear mounted on the end of the roller 40 of the roller arm 37 meshes with the gear 14 of the driving source 6.

The second pin 51 of the carriage chassis 45 is located in an end, near the recording medium insertion opening 12, of the horizontal long portion 24 of the first guide groove 23 when the CD 2a or 2b is not inserted in the main body 3, as shown in Fig. 6. The second pin 51 of the clamping arm 46 is located in an end, near the recording medium insertion opening 12, of the horizontal portion 27a of the second guide groove 27. Thus, the carriage chassis 45 and the clamping arm 46 are apart from each other.

The locking pin 52 is located in an end, near the recording medium insertion opening 12, of the horizontal long portion 35 of the locking concave groove 31 when the CD 2a or 2b is not inserted in the main body 3, as shown in Fig. 6. The hook 54 of the locking member 44 is engaged with the locking pin 52 and the third pin 59 of the locking member 44 is located in an end, near the recording medium insertion opening 12, of the slide long portion 32 of the locking guide groove 30. Thus, the hook 54 is engaged with the locking pin 52 and the locking member 44 fixes the clamping playback unit 5 on the main body 3.

The positioning member 61 is located in the positioning position (the first location) as shown in Fig. 5 when the CD 2a or 2b is not inserted in the main body 3. The other end 62b of the CD sensing member 62 is apart from the arm body 49 of the clamping arm 46. The sensing member 60 is placed in the touching position, as shown in Fig. 10.

The CD 2a or 2b is inserted into the recording medium insertion opening 12 by a user of the recording medium playback device 1. When a large-diameter CD 2b is inserted into the recording medium insertion opening 12 in a condition shown in Fig. 6, the motor 13 rotates, for example in a normal direction, and the roller 40 is rotated. The large-diameter CD 2a is clamped between the roller 40 rotated by driving force of the motor 13 and the slide member 42 of the disc guide 38.

The large-diameter CD 2a is carried between the carriage chassis 45 and the clamping arm 46 toward the playback position by rotation of the roller 40. The large-diameter CD 2a abuts on the CD sensing member 62. The large-diameter CD 2a moves the other end 62b of the CD sensing member 62 close to the arm body 49 of the clamping arm 46. The positioning member 61 moves to the second location.

Thereby, the large-diameter CD 2a abuts on the large-diameter CD positioning portion 68 as shown in Fig. 13. The large-diameter CD 2a rotates the sensing member 60 along the arrow A in Fig. 10.

Thus, the large-diameter CD 2a is positioned in the clamping playback unit 5 as shown in Fig. 13, 14. When the sensing member 60 is energized toward the detached position shown in Fig. 17, the rack pushing portion 75 pushes the rack 15 the recording medium insertion opening 12. The rack 15 meshes with one of the gears 14 so that the slide member 7 starts to slide gradually toward the recording medium insertion opening 12.

The pin 43 of the roller arm 37 moves gradually along the slant guide surface 22 close to the bottom wall 9. The pin 43 of the disc guide 38 goes into the slant long portion 21a from the horizontal long portion 20a. The pin 43 of the disc guide 38 moves gradually along the slant long portion 21a close to the bottom wall 9. Thus, the disc guide 38 and the roller arm 37 move gradually close to the bottom wall 9.

The second pin 51 of the carriage chassis 45 moves through the horizontal portion 24 into the upwardly slant portion 25. Then, the second pin 51 of the carriage chassis 45 moves gradually along the upwardly slant portion 25 close to the top wall 10. The second pin 51 of the clamping arm 46 moves gradually through the horizontal portion 27a and along the downwardly slant portion 28 close to the bottom wall 9. Thus, the carriage chassis 45 and the clamping arm 46 move gradually close to each other.

Thereafter, the locking pin 52 moves along the horizontal long portion 35 relatively to the slide member 7. The third pin 59 of the locking member 44 moves along the slide long portion 32 of the lock guide groove 30 relatively to the slide member 7. The locking member 44 maintains to be engaged with the locking pin 52.

When the large-diameter CD 2a is positioned between the turning table 48 and the clamper 50, the pin 43 of the roller arm 37 moves gradually along the slant guide surface 22 close to the bottom wall 9. The pin 43 of the disc guide 38 goes into the slant long portion 21b from the slant long portion 21a. Then, the pin 43 of the disc guide 38 moves gradually along the slant long portion 21b close to the top wall 10. Thus, the disc guide 38 and the roller arm 37 move apart from each other.

The second pin 51 of the carriage chassis 45 moves gradually along the upwardly slant portion 25 close to the top wall 10. The second pin 51 of the clamping arm 46 moves gradually along the downwardly slant portion 28 close to the bottom wall 9. Thus , the carriage chassis 45 and the clamping arm 46 move gradually close to each other.

The carriage chassis 45 and the clamping arm 46 come close to each other as shown in Fig. 20 so that the large-diameter CD 2a is clamped between the turning table 48 and the clamper 50. When the large-diameter CD 2a is clamped between the turning table 48 and the clamper 50, the roller 40 of the roller arm 37 and disc guide 38 move simultaneously apart from the large-diameter CD 2a. Thus, the carrying unit 4 releases the large-diameter CD 2a and simultaneously the clamping playback unit 5 clamps the large-diameter CD 2a so that the large-diameter CD 2a is positioned in the playback position. The projecting portion provided on the carriage chassis 45 abuts on the cam member 64 and then the cam member 64 is rotated in the same rotating direction as the sensing member 60. And the pushing portion 77 of the cam member 64 pushes the other end 65c of the second torsion spring 65 along the arrow A. The second torsion spring 65 energizes the spring contact portion 78 along the arrow A. Thereafter, the sensing member 60 is energized toward the detached position shown in Fig. 17 and moves to the detached position.

When the clamping playback unit 5 clamps the large-diameter CD 2a, the pin 43 of the roller arm 37 abuts on the slant guide surface 22 at the center area thereof, as shown in Fig. 7. The pin 43 of the disc guide 38 is located at a top end of the slant long portion 21b. Thus, the roller arm 37 and the disc guide 38 move gradually apart from each other.

When the clamping playback unit 5 clamps the large-diameter CD 2a, the second pin 51 of the carriage chassis 45 is located at an end, apart from the recording medium insertion opening 12, of the upwardly slant portion 25 of the first guide groove 23, as shown in Fig. 7. The second pin 51 of the clamping arm 46 is located in the widening portion 29 of the second guide groove 27. Thus, the carriage chassis 45 and the clamping arm 46 are positioned close to each other.

When the clamping playback unit 5 clamps the large-diameter CD 2a, the locking pin 52 is located in the widening portion 36 of the locking concave groove 31, as shown in Fig. 7. The third pin 59 of the locking member 44 is located at a crossing point in which the slide long portion 32 of the locking guide groove 30 and the cross long portion 33 thereof intersect to each other. Therefore, the locking member 44 is slightly rotated from the lock position to a direction to disengage the hook 54 from the locking pin 52. Thus, the locking member 44 is slightly moved from the lock position toward the unlock position.

When the clamping playback unit 5 clamps the large-diameter CD 2a, the center portion 63a of the torsion spring 63 abuts on the chassis body 47 of the carriage chassis 45 as shown in Fig. 20. The torsion spring 63 energizes the positioning member 61 along the arrow N in Fig. 20 toward the arm body 49 of the clamping arm 46. Then, the large-diameter CD positioning portion 68 moves apart from the outer edge of the large-diameter CD 2a. Thus, the torsion spring 63 energizes the positioning member 61 toward the detached position.

When the motor 13 rotates more in the normal direction and the slide member 7 is moved toward the recording medium insertion opening 12, the pin 43 of the roller arm 37 moves gradually along the slant guide surface 22 close to the bottom wall 9. After the pin 43 of the disc guide 38 moves gradually along the slant long portion 21b close to the top wall 10, the pin 43 goes into the horizontal long portion 20a. Thus, the disc guide 38 and the roller arm 37 move more apart from each other.

After the second pin 51 of the carriage chassis 45 goes into the widening portion 26 from the upwardly slant portion 25, the second pin 51 goes out of the first guide groove 23. The second pin 51 of the clamping arm 46 goes out of the second guide groove 27. Thus, the carriage chassis 45 and the clamping arm 46 are maintained to be close to each other.

The locking pin 52 goes out of the locking concave groove 31. The third pin 59 of the locking member 44 is in the crossing long portion 33 of the locking guide groove 30 so that the locking member 44 is rotated around the end 58 by moving the slide member 7 toward the recording medium insertion opening 12. Then, the locking pin 52 goes completely out of the hook 54 so that locking the locking pin 52 by the hook 54 is released. Thus, locking the locking pin 52 by the locking member 44 is released and the locking member 44 is moved to the unlock position, as shown in Fig. 8.

In the unlock position as shown in Fig. 8, the pin 43 of the roller arm 37 contacts with an end, apart from the recording medium insertion opening 12, of the slant guide surface 22. The pin 43 of the disc guide 38 is located at an end, apart from the recording medium insertion opening 12, of the horizontal long portion 20b. Thus, the roller arm 37 and the disc guide 38 are apart from each other. The roller arm 37 is located close to the bottom wall 9 in proportion to being the arm body 39 parallel to the bottom wall 9. The disc guide 38 is located close to the top wall 10 in proportion to being the guide body 41 parallel to the top wall 10.

In the unlock position, the second pin 51 of the carriage chassis 45 is out of the first guide groove 23 as shown in Fig. 8. The second pin 51 of the clamping arm 46 is out of the second guide groove 27. The locking pin 52 is out of the locking concave groove 31. The third pin 59 of the locking member 44 is positioned in the crossing long portion 33 of the lock guide groove 30.

The locking pin 52 of the locking member 44 is disengaged so that the clamping playback unit 5 is movable regarding the main body 3 by the not-shown damper and coil spring, mentioned above. In this condition, the recording medium playback device 1 plays back information recorded on the large-diameter CD 2a to output the information by sound.

When the clamping playback unit 5 is moved from the condition to clamp the large-diameter CD 2 as shown in Fig. 7 to the unlock position shown in Fig. 8, the locking member 44 is rotated gradually around the end 58. Then, locking the locking pin 52 of the locking member 44 is gradually released in proportion to moving the locking pin 52 gradually out of the locking concave groove 31. The roller arm 37 and the disc guide 38 also go gradually apart from the large-diameter CD 2a.

During the locking member 44 is moving from the lock position to the unlock position, the locking pin 52 can move in an area surrounded by the widening portion 36 and the hook 54. During the locking member 44 is moving from the lock position to the unlock position, the locking member 44 is rotated around the end 58 so that the area surrounded by the widening portion 36 and the hook 54 is increased gradually.

During the locking member 44 is moving from the lock position to the unlock position, the sliding member 7 is moved toward the recording medium insertion opening 12 so that the second pins 51 go gradually out of the first guide groove 23 and the second guide groove 27. During going out of the first guide groove 23 and the second guide groove 27, the second pins 51 can move in the widening portion 26 or 29. Therefore, during the second pin 51 is going out of the first guide groove 23 and the second guide groove 27, an area in which the second pins 51 can move are increased gradually.

During the locking member 44 is moving from the lock position to the unlock position, an area in which the clamping playback unit 5 can move regarding the main body 3 is increased gradually. However, the sliding member 7 moves the locking member 44 not to contact the large-diameter CD 2a, clamped in the clamping playback unit 5 to be movable by moving the locking member 44, with the roller arm 37 and disc guide 38 of the carrying unit 4.

Thus, when the clamping playback unit 5 clamps the large-diameter CD 2a in the recording medium playback device 1 according to the embodiment of this invention, the roller arm 37 and disc guide 38 of the carrying unit 4 move gradually apart from the large-diameter CD 2a and the locking member 44 is unlocked gradually. When the locking member 44 is placed in the unlock position, the clamping playback unit 5 can read information recorded on the large-diameter CD 2a.

When the large-diameter CD 2a is ejected from the main body 3 after playback of the large-diameter CD 2a is finished in the recording medium playback device, the motor 13 rotates in the opposite direction mentioned above, for example in the reverse rotation, to move the sliding member 7 apart from the recording medium insertion opening 12.

Then, the locking member 44 is rotated gradually from the unlock position to the lock position and the area in which the clamping playback unit 5 can move regarding the main body 3 is decreased gradually. The roller arm 37 and the disc guide 38 move gradually close to each other. When the large-diameter CD 2a is clamped between the roller 40 of the roller arm 37 and the disc guide 38, the carriage chassis 45 and the clamping arm 46 move apart from the large-diameter CD 2a. The clamping of the clamping playback unit 5 is released.

Thereby, the center portion 63a of the torsion spring 63 moves apart from the chassis body 47 of the carriage chassis 45 and energizes the positioning member 61 toward the positioning position. The positioning member 61 is placed in the positioning position. The large-diameter CD 2a is carried toward the recording medium insertion opening 12 by the roller 40 rotation. Then, the second torsion spring 65 energizes the sensing member 60 toward the touching position. The sensing member 60 is placed in the touching position. Then, the large-diameter CD 2a is ejected through the recording medium insertion opening 12 out of the main body 3.

When the small-diameter CD 2b is inserted through the recording medium insertion opening 12 into the main body 3, the small-diameter CD 2b is firstly clamped between the roller 40 and the slide member 42 without abutting on the CD sensing member 62 and is carried toward the playback position.

Then, the small-diameter CD 2b abuts on the small-diameter CD positioning portion 67, as shown in Fig. 15. The small-diameter CD 2b rotates the sensing member 60 along the arrow A in Fig. 10.

Thus, the small-diameter CD 2b is positioned in the clamping playback unit 5 as shown in Fig. 15, 16. Similarly as the large-diameter CD 2a, the slide member 7 slides toward the recording medium insertion opening 12, and then the roller arm 37 and the disc guide 38 release the small-diameter CD 2b, and simultaneously the carriage chassis 45 and the clamping arm 46 clamp the small-diameter CD 2b.

Thereby, the center portion 63a of the torsion spring 63 abuts on the chassis body 47 of the carriage chassis 45. The torsion spring 63 energizes the positioning member 61 toward the detached position. The positioning member is placed in the detached position, and then the small-diameter CD positioning portion 67 moves apart from the small-diameter CD 2b. The projecting portion provided on the carriage chassis 45 abuts on the cam member 64 and rotates the cam member 64 in the same rotating direction as the sensing member 60. The pushing portion 77 of the cam member 64 pushes the other end 65c of the second torsion spring 65 along the arrow A. Then, the second torsion spring 65 energizes the spring contact portion 78 along the arrow A. The sensing member 60 is energized toward the detached position, shown in Fig. 7, and is placed in the detached position. Thus, the small-diameter CD 2b is clamped by the clamping playback unit 5. The small-diameter CD 2b is ejected out of the main body 3 similarly as the large-diameter CD 2a mentioned above.

Thus, the positioning member 61 is energized toward the arm body 49 of the clamping arm 46 by the torsion spring 63 in the detached position. If the clamping arm 46 and the positioning member 61 have respectively dimensional errors or error in assembling, a gap between the clamping arm 46 and the carriage chassis 45 may be changed when the CD 2a or 2b is clamped. In this case, the position of the center portion 63a regarding the supporting pin 71 of the supporting portion 69 is changed. The elastic deformation value of the other end 63c is changed.

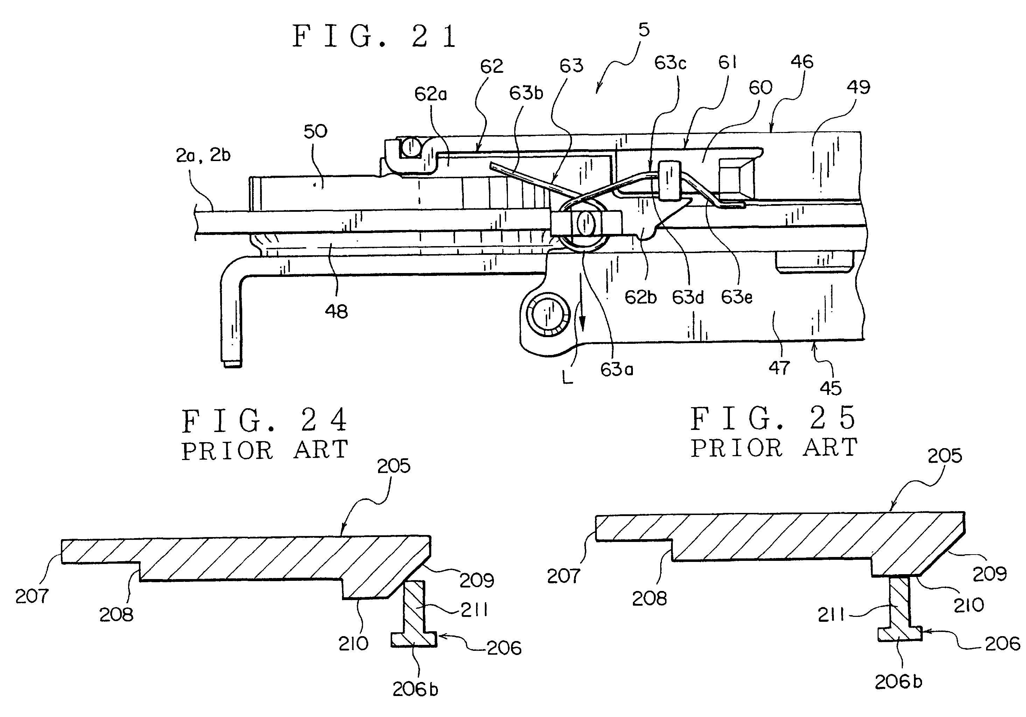

When the gap between the clamping arm 46 and the carriage chassis 45 is wider as shown in Fig. 21, the center portion 63a is shifted closer to the carriage chassis 45 regarding the supporting pin 71 by being energized along an arrow L in Fig. 21. Then, the elastic deformation value of the other end 63c is decreased.

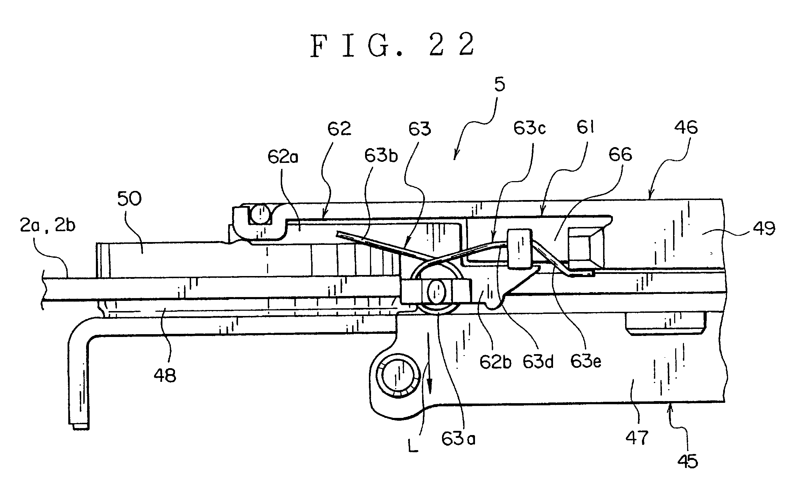

When the gap between the clamping arm 46 and the carriage chassis 45 is narrower as shown in Fig. 22, the center portion 63a is shifted apart from the carriage chassis 45 regarding the supporting pin 71. Then, the elastic deformation value of the other end 63c is increased. Therefore, the positioning member 61 can be prevented from energizing the clamping arm 46 too much to be moved apart from the carriage chassis 45 and it is prevented that the CD 2a, 2b can not be clamped by the turning table 48 and the clamper 50.

When the clamping playback unit 5 clamps the CD 2a or 2b, the other end 63c is elastic deformed and the torsion spring 63 energizes the positioning member 61. Therefore, even if the gap between the clamping arm 46 and the carriage chassis 45 is wider, the positioning member 61 is prevented from locating too apart from the arm body 49 of the clamping arm 46. Then, the positioning member 61 is prevented from vibrating between the clamping arm 46 and the carriage chassis 45.

Thus, to change a relative position of the center portion 63a to the supporting portion 69 and an elastic deformation value of the other end 63c of the torsion spring 63, the relative position of the positioning member 61 to the clamping arm 46 can be within a predetermined range. Then, positioning discrepancy between the positioning member 61 and the clamping arm 46 can be compensated securely.

The predetermined range herein is between a position in which the turning table 48 and the clamper 50 are disabled to clamp the CD 2a or 2b and a position in which the positioning member 61 is vibrated between the clamping arm 46 and the carriage chassis 45. However, a point in which the turning table 48 and the clamper 50 are disabled to clamp the CD 2a or 2b and a point in which the positioning member 61 is vibrated between the clamping arm 46 and the carriage chassis 45 are not included in the predetermined range.

When the clamping playback unit 5 clamps the CD 2a or 2b, the other end 65c is elastic deformed and the second torsion spring 65 energizes the sensing member 60. The positioning member 61 and the sensing member 60 may have respectively dimensional errors or error in assembling. In this case, the elastic deformation value of the other end 65c of the second torsion spring 65 is changed. Then, the relative position of the sensing member 60 to the positioning member 61 can be within a predetermined range. Therefore, positioning discrepancy between the sensing member 60 and the positioning member 61 can be compensated securely.

The predetermined range herein is between a position in which the respective CD positioning portions 67, 68 abut on the CD 2a or 2b and a position in which the respective CD positioning portions 67, 68 break a part of the positioning member 61 by over-pushing the part of the positioning member 61 to be apart from the CD 2a or 2b. However, a point in which the respective CD positioning portions 67, 68 abut on the CD 2a or 2b and a point in which the respective CD positioning portions 67, 68 break a part of the positioning member 61 are not included in the predetermined range.

During the roller arm 37 and the disc guide 38 of the carrying unit 4 are going apart from the CD 2a or 2b, the locking member 44 moves gradually from the lock position to the unlock position. Then, a time required for starting to read information recorded on the CDs 2a, 2b after inserting the CDs 2a, 2b into the main body 3 can be shortened.

The clamping arm 46, the positioning member 61, the torsion spring 63 and the supporting portion 69 structure the positional displacement compensating mechanism described in claims 1-3. The positioning member 61, the sensing member 60 and the second torsion spring 65 structure the positional displacement compensating mechanism described in claim 4.

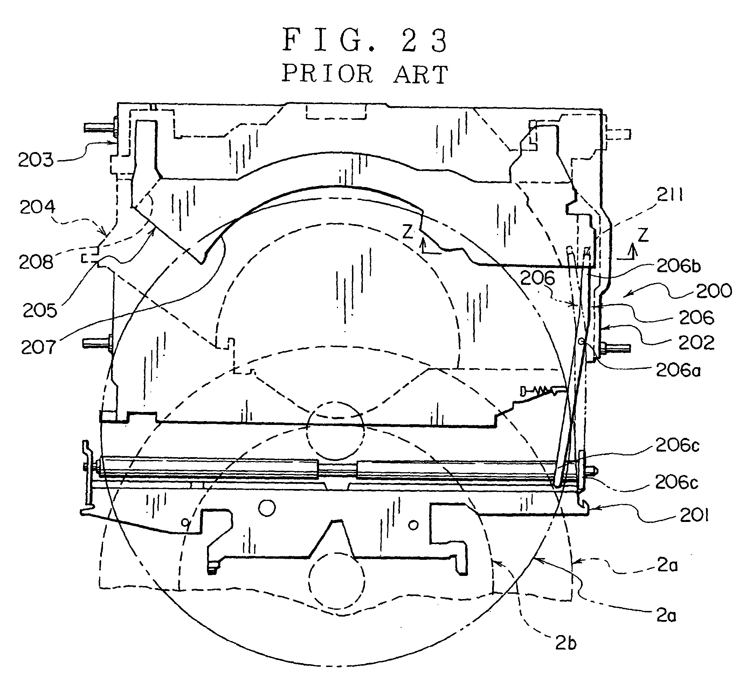

The recording medium playback device 200 by prior art can playback both the large-diameter CD 2a and the small-diameter CD 2b. The recording medium playback device 200 includes a carrying roller 201 and a clamping playback unit 202 as shown in Fig. 23.

The carrying roller 201 is for carrying the CD 2a or 2b into a main body and for ejecting the CD 2a or 2b out of a main body. The clamping playback unit 202 is for clamping the CD 2a or 2b in a playback position and outputting information in the CD 2a, 2b.

The clamping playback unit 202 includes a carriage chassis 203, a clamping arm 204, a positioning member 205 and a seesaw arm 206. The carriage chassis 203 and the clamping arm 204 can move close or apart mutually. The clamping playback unit 202 can clamp the CD 2a, 2b between the carriage chassis 203 and the clamping arm 204. The positioning member 205 is located between the carriage chassis 203 and the clamping arm 204.

The positioning member 205, as shown in Fig. 24 and 25, includes a small-diameter CD positioning portion 207, a large-diameter CD positioning portion 208, a slant surface 209 and a parallel surface 210. The positioning portions 207, 208 abut respectively on the CD 2b, 2a and position the CD 2b, 2a in the playback position. The positioning portions 207, 208 are shifted to each other along a direction in which the carriage chassis 203 and the clamping arm 204 face each other.

Therefore, the positioning member 205 moves along the direction in which the carriage chassis 203 and the clamping arm 204 face each other to position the small-diameter CD 1b with the small-diameter CD positioning portion 207 or to position the large-diameter CD 2a with the large-diameter CD positioning portion 208.

In an example shown in Fig. 23, the small-diameter CD positioning portion 207 is placed nearer the clamping arm 204 than the large-diameter CD positioning portion 208. The positioning member 205 is energized toward the carriage chassis 203 so that the small-diameter CD positioning portion 207 faces to an outer edge of the CD 2a or 2b inserted into the main body. The positioning member 205 is moved toward the clamping arm 204 to position the large-diameter CD 2a.

The slant surface 209 slants to a direction in which the carriage chassis 203 and the clamping arm 204 face each other. The parallel surface 210 is contiguous to the slant surface 209 and parallel to both the carriage chassis 203 and the clamping arm 204.

The seesaw arm 206 is formed into bar shape extending along one direction. A longer direction of the seesaw arm 206 is along the carrying direction of the CD 2a, 2b. The seesaw arm 206 is supported rotatably around a center portion 206a in the longer direction thereof by the carriage chassis 203. The seesaw arm 206 is energized to position one end 206b between the slant surface 209 and the carriage chassis 203 by a not-shown spring. The seesaw arm 206 is provided at the one end 206b with a boss 211.

Then, the seesaw arm 206 is located in a position shown with a solid line in Fig. 23 when the CD 2a or 2b is not inserted. In this condition, a small-diameter CD positioning portion 207 of the positioning member 205 corresponds to the CD 2a, 2b being inserted into the main body.

When a large-diameter CD 2a is inserted, an outer edge of the large-diameter CD 2a abuts on the other end 206c of the seesaw arm 206. Then, the other end 206c moves toward the outside of the main body and the one end 206b moves toward the inside of the main body so that the seesaw arm 206 is rotated toward a position shown with an alternate-long-and-two-short-dashes line in Fig. 23.

After the boss 211 abut on the slant surface 209, the boss 211 moves toward the parallel surface 210. The boss moves the positioning member 205 toward the clamping arm 204. The boss 211 abuts on the parallel surface 210 as shown in Fig. 25. In the position shown with an alternate-long-and-two-short-dashes line in Fig. 23, the large-diameter CD positioning portion 208 of the positioning member 205 corresponds to the CD 2a, 2b being inserted into the main body.

When a small-diameter CD 2b is inserted, the small-diameter CD 2b does not abut on the seesaw arm 206. Then, the small-diameter CD 2b abuts securely on the small-diameter CD positioning portion 207. Thus, the seesaw arm 206, extending from a center area of the carriage chassis 203 to the carrying roller 201, is used in the recording medium playback device 200 by prior art shown in Fig. 23.

The recording medium playback device 200 by prior art, mentioned above, has a relatively long seesaw arm 206 for the main body. The recording medium playback device 200 by prior art is required to have a room for moving the long seesaw arm 206. Then, recording medium playback device 200 may have a large main body.

In the recording medium playback device 1 according to an embodiment of the invention, the CD sensing member 62, rotatable around the one end 62a, whose the other end 62b is engaged with the positioning member 61, is used therein for moving the positioning member 61 close or apart against the clamping arm 46. The CD sensing member 62 moves the positioning member 61 to close or apart for the clamping arm 46 by moving the other end 62b close or apart for the arm body 49 of the clamping arm 46.

When the other end 62b of the CD sensing member 62 is parted from the arm body 49 of the clamping arm 46, the small-diameter CD positioning portion 67 corresponds to a small-diameter CD 2b being inserted into the main body. When the other end 62b of the CD sensing member 62 is close to the arm body 49 of the clamping arm 46, the large-diameter CD positioning portion 68 corresponds to a large-diameter CD 2b being inserted into the main body.

The CD sensing member 62 is supported to rotate the one end 62a freely by the clamping arm 46. The other end 62b of the CD sensing member 62 is engaged with the positioning member 61. Then, a total length from the one end 62a to the other end 62b can be shortened. The CD sensing member 62 is not required to project toward an outside of the clamping arm 46. Therefore, the size of the main body 3 is not increased.

The one torsion spring 63 energizes the CD sensing member 62 toward both the positioning position and the detached position. Thus, number of parts in the recording medium playback device 1 is not increased.

## Claims

1. A positional displacement compensating mechanism (46,61,63) for compensating positional displacement between two mutually movable members in a recording medium playback device such as a compact disc player comprising:
a first member (46) for clamping the recording medium (2a,2b);
a second member (61) for positioning the recording medium (2a,2b) being inserted into the main body of said record medium playback device, mounted movably between a first position and a second position regarding the first member (46),
**characterised by**
a positional displacement compensating device (63,69) for switching to a first condition to energize the second member (61) toward the first position or to a second condition to energize the second member (61) toward the second position, and maintaining a relative position of the second member (61) to the first member (46) in a predetermined range when the second member (61) is energized toward the first position.

2. The positional displacement compensating mechanism according to claim 1, wherein the positional displacement compensating device includes:
a torsion spring (63), one end (63b) and the center portion (63a) of which are mounted on the first member (46) and the other end (63e) thereof abuts on the second member (61), for energizing the second member (61) respectively toward the first position and the second position; and
a supporting portion (69) being mounted on the first member (46) and for supporting, movably, the center portion (63a) of the torsion spring (63).

3. The positional displacement compensating mechanism according to claim 2, wherein the supporting portion (69) allows the center (63a) of the torsion spring (63) to move freely along a direction in which the torsion spring (63) energizes the second member (61) toward the first position.

4. A recording medium playback device comprising the positional displacement compensating mechanism of claim 1, in which a recording medium (2a,2b) is inserted into a main body to playback information recorded on the recording medium (2a,2b), wherein both first and second members together form part of a clamping playback device (5) for clamping a recording medium (2a,2b) inserted into the main body (3) and playing back the information recorded on the recording medium (2a,2b), wherein the first member includes a pair of clamping members (45,46) for clamping the recording medium (2a,2b) and the second member is a positioning member (61) for positioning the recording medium (2a,2b) being inserted into the main body (3), wherein the first position is a positioning position for positioning the recording medium (2a,2b) to abut on the recording medium (2a,2b) inserted into the main body (3) and the second position is a detached position for being parted from the positioned recording medium (2a,2b).

5. The recording medium playback device according to claim 4, wherein the positional displacement compensating device includes:
a torsion spring (63), one end (63b) and center portion (63a) of which are mounted on the one clamping member (46) and the other end (63c) thereof abuts on the positioning member (61) to energize the positioning member (61) respectively toward the detached position and the positioning position and the center portion (63a) thereof abuts on the other clamping member (45) when the pair of clamping members (45,46) clamps a recording medium (2a,2b); and
a supporting portion (69) for supporting the center portion (63a) of the torsion spring (63) movably along a direction in which the positioning member (61) moves relatively against the one clamping member (45).

6. The recording medium playback device according to claim 5, wherein the supporting portion (69) allows the center (63a) of the torsion spring (63) to move freely along a direction in which the torsion spring (63) energizes the positioning member (61) toward the detached position.

## Patentansprüche

1. Ein Positionsverschiebungs-Kompensationsmechanismus (46, 61, 63) zum Kompensieren der positionellen Verschiebung zwischen zwei gegenseitig beweglichen Elementen in einem Aufnahmemediumwiedergabegerät wie einem CD-Spieler, umfassend:
ein erstes Element (46) zum Arretieren des Aufnahmemediums (2a, 2b);
ein zweites Element (61) zum Positionieren des in den Hauptkörper des Aufnahmemediumwiedergabegeräts eingegebenen Aufnahmemediums (2a, 2b), das beweglich zwischen einer ersten Position und einer zweiten Position bezüglich des ersten Elements (46) montiert ist,
**gekennzeichnet durch**
eine Positionsverschiebungs-Kompensationsanordnung (63, 69) zum Wechseln in einen ersten Zustand, um das zweite Element (61) zu der ersten Position zu drängen, oder in einen zweiten Zustand, um das zweite Element (61) zu der zweiten Position zu drängen, und zum Halten einer relativen Position des zweiten Elements (61) gegenüber dem ersten Element (46) in einem vorbestimmten Bereich, wenn das zweite Element (61) zu der ersten Position gedrängt wird.

2. Der Positionsverschiebungs-Kompensationsmechanismus nach Anspruch 1, wobei die Positionsverschiebungs-Kompensationsanordnung umfasst:
Eine Torsionsfeder (63), deren eines Ende (63b) und deren Mittelabschnitt (63a) am ersten Element (46) montiert sind, und deren anderes Ende (63e) an das zweite Element (61) angrenzt, um das zweite Element (61) jeweils zur ersten Position und zur zweiten Position zu drängen; und
einen am ersten Element (46) montierten Halteabschnitt (69) zum beweglichen Halten des Mittelabschnitts (63a) der Torsionsfeder (63).

3. Der Positionsverschiebungs-Kompensationsmechanismus nach Anspruch 2, wobei der Halteabschnitt (69) zulässt, dass sich die Mitte (63a) der Torsionsfeder (63) frei entlang einer Richtung bewegt, in welcher die Torsionsfeder (63) das zweite Element (61) zur ersten Position drängt.

4. Ein Aufnahmemediumwiedergabegerät umfassend den Positionsverschiebungs-Kompensationsmechanismus nach Anspruch 1, in welchem ein Aufnahmemedium (2a, 2b) in einen Hauptkörper eingegeben ist, um die auf dem Aufnahmemedium (2a, 2b) aufgenommene Information wiederzugeben, worin die ersten und zweiten Elemente zusammen einen Teil einer Arretierwiedergabeeinrichtung (5) zum Arretieren eines in den Hauptkörper (3) eingegebenen Aufnahmemediums (2a, 2b) und zum Wiedergeben der auf dem Aufnahmemedium (2a, 2b) aufgenommenen Information bilden, wobei das erste Element ein Paar von Arretierelementen (45, 46) zum Arretieren des Aufnahmemediums (2a, 2b) umfasst und das zweite Element ein Positionierelement (61) zum Positionieren des in den Hauptkörper (3) eingegebenen Aufnahmemediums (2a, 2b) ist, wobei die erste Position eine Positionierungsposition zum Positionieren des Aufnahmemediums (2a, 2b) ist, um an das in den Hauptkörper (3) eingelegte Aufnahmemedium (2a, 2b) anzugrenzen, und die zweite Position eine gelöste Position ist, um von dem positionierten Aufnahmemedium (2a, 2b) getrennt zu sein.

5. Das Aufnahmemediumwiedergabegerät nach Anspruch 4, wobei die Positionsverschiebungs-Kompensationsanordnung umfasst:
Eine Torsionsfeder (63), deren eines Ende (63b) und deren Mittelabschnitt (63a) an dem Arretierelement (46) montiert sind und deren anderes Ende (63c) an das Positionierelement (61) angrenzt, um das Positionierelement (61) jeweils zu der gelösten Position und der Positionierungsposition zu drängen, und deren Mittelabschnitt (63a) an das andere Arretierelement (45) angrenzt, wenn das Paar der Arretierelemente (45, 46) ein Aufnahmemedium (2a, 2b) arretiert; und
einen Halteabschnitt (69), um den Mittelabschnitt (63a) der Torsionsfeder (63) beweglich entlang einer Richtung, in welcher das Positionierelement (61) sich relativ gegenüber dem einen Arretierelement (45) bewegt, zu halten.

6. Das Aufnahmemediumwiedergabegerät nach Anspruch 5, wobei der Halteabschnitt (69) zulässt, dass sich die Mitte (63a) der Torsionsfeder (63) frei entlang einer Richtung, in welcher die Torsionsfeder (63) das Positionierelement (61) zur gelösten Position drängt, bewegt.

## Revendications

1. Mécanisme de compensation de déplacement de position (46, 61, 63) destiné à compenser un déplacement de position entre deux éléments mutuellement mobiles dans un appareil de reproduction de support d'enregistrement comme une platine pour disque compact, comprenant :
un premier élément (46) destiné à bloquer le support d'enregistrement (2a, 2b) ;
un second élément (61) destiné à positionner le support d'enregistrement (2a, 2b) qui est introduit à l'intérieur du corps principal dudit appareil de reproduction de support d'enregistrement monté de manière amovible entre une première position et une seconde position par rapport au premier élément (46),
**caractérisé par**,
un appareil de compensation de déplacement de position (63, 69) destiné à passer sur une première condition afin d'activer le second élément (61) vers la première position ou sur une seconde condition afin d'activer le second élément (61) vers la seconde position, et à maintenir une position relative du second élément (61) par rapport au premier élément (46) dans une plage prédéterminée lorsque le second élément (61) est activé vers la première position.

2. Mécanisme de compensation de déplacement de position selon la revendication 1, dans lequel l'appareil de compensation de déplacement de position comprend :
un ressort de torsion (63), dont une extrémité (63b) et la partie centrale (63a) sont montées sur le premier élément (46), et l'autre extrémité de celui-ci est en butée contre le second élément (61), afin d'activer le second élément (61) respectivement vers la première position et vers la seconde position ; et
une partie de support (69) qui est montée sur le premier élément (46) et destinée à supporter de manière mobile la partie centrale (63a) du ressort de torsion (63).

3. Mécanisme de compensation de déplacement de position selon la revendication 2, dans lequel la partie de support (69) permet à la partie centrale (63a) du ressort de torsion (63) de se déplacer librement le long d'une direction dans laquelle le ressort de torsion (63) active le second élément (61) vers la première position.

4. Appareil de reproduction de support d'enregistrement comprenant le mécanisme de compensation de déplacement de position selon la revendication 1, dans lequel un support d'enregistrement (2a, 2b) est introduit à l'intérieur d'un corps principal, afin de reproduire une information enregistrée sur le support d'enregistrement (2a, 2b), dans lequel, à la fois les premier et second éléments forment conjointement une partie d'un appareil de reproduction à blocage (5) destiné à bloquer un support d'enregistrement (2a, 2b) introduit à l'intérieur du corps principal (3) et à reproduire les informations enregistrées sur le support d'enregistrement (2a, 2b), dans lequel le premier élément comprend une paire d'éléments de blocage (45, 46) destinés à bloquer le support d'enregistrement (2a, 2b), et le second élément est un élément de positionnement (61) destiné à positionner le support d'enregistrement (2a, 2b) qui doit être introduit à l'intérieur du corps principal (3), dans lequel la première position est une position de positionnement destinée à positionner le support d'enregistrement (2a, 2b) introduit à l'intérieur du corps principal (3) et à mettre en butée le support d'enregistrement (2a, 2b) et la seconde position est une position de séparation permettant de séparer le support d'enregistrement (2a, 2b) de la position d'enregistrement.

5. Appareil de reproduction de support d'enregistrement selon la revendication 4, dans lequel l'appareil de compensation de déplacement de position comprend :
un ressort de torsion (63), dont une extrémité (63b) et la partie centrale (63a) sont montées sur le premier élément de blocage (46), et l'autre extrémité (63c) de celui-ci est en butée sur l'élément de positionnement (61), afin d'activer l'élément de positionnement (61) respectivement vers la position de séparation et la position de positionnement, et la partie centrale (63a) de celui-ci est en butée sur l'autre élément de blocage (45) lorsque la paire d'éléments de blocage (45, 46) bloque un support d'enregistrement (2a, 2b) ; et
une partie de support (69) destinée à supporter la partie centrale (63a) du ressort de torsion (63) de manière mobile le long d'une direction dans laquelle l'élément de positionnement (61) se déplace de manière relative contre l'élément de blocage (45).

6. Appareil de reproduction de support d'enregistrement selon la revendication 5, dans lequel la partie de support (69) permet à la partie centrale (63a) du ressort de torsion (63) de se déplacer librement le long d'une direction dans laquelle le ressort de torsion (63) active l'élément de positionnement (61) vers la position de séparation.
